(19) **Europäisches Patentamt / European Patent Office / Office européen des brevets**

(11) **EP 4 199 399 B1**

(12) **EUROPEAN PATENT SPECIFICATION**

(45) Date of publication and mention
of the grant of the patent:
**06.05.2026  Bulletin 2026/19**

(21) Application number: **22778868.4**

(22) Date of filing: **28.03.2022**

(51) International Patent Classification (IPC):
***H04L 1/00*** *(2006.01)*    ***H04L 69/323*** *(2022.01)*
***H04W 84/12*** *(2009.01)*

(52) Cooperative Patent Classification (CPC):
**H04L 69/323; H04L 1/0041; H04L 1/0045;**
**H04W 84/12**

(86) International application number:
**PCT/CN2022/083421**

(87) International publication number:
**WO 2022/206686 (06.10.2022 Gazette 2022/40)**

(54) **METHOD FOR PACKAGE EXTENSION, DEVICE, AND STORAGE MEDIUM**

VERFAHREN ZUR PAKETERWEITERUNG, VORRICHTUNG UND SPEICHERMEDIUM

PROCÉDÉ D'EXTENSION DE PAQUETAGE, DISPOSITIF ET SUPPORT D'ENREGISTREMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.03.2021  CN 202110343378**

(43) Date of publication of application:
**21.06.2023  Bulletin 2023/25**

(60) Divisional application:
**26153975.3**

(73) Proprietor: **Huawei Technologies Co., Ltd.**
**Shenzhen, Guangdong 518129 (CN)**

(72) Inventors:
• **HU, Mengshi**
  **Shenzhen, Guangdong 518129 (CN)**
• **YU, Jian**
  **Shenzhen, Guangdong 518129 (CN)**
• **GAN, Ming**
  **Shenzhen, Guangdong 518129 (CN)**

(74) Representative: **Thun, Clemens**
**Mitscherlich PartmbB**
**Karlstraße 7**
**80333 München (DE)**

(56) References cited:
EP-A1- 4 277 175      CN-A- 106 936 553
CN-A- 107 409 074     CN-A- 110 999 241
CN-A- 112 243 265     US-A1- 2018 014 327

• **MENGSHI HU (HUAWEI): "PDT- Nominal Packet Padding Values Selection Rules", vol. 802.11 EHT; 802.11be, no. 2, 11 March 2021 (2021-03-11), pages 1 - 7, XP068179117, Retrieved from the Internet <URL:https://mentor.ieee.org/802.11/dcn/21/11-21-0402-02-00be-pdt-nominal-packet-padding-values-selection-rules.docx> [retrieved on 20210311]**

• **802 11 WORKING GROUP OF THE LAN/MAN STANDARDS COMMITTEE OF THE IEEE COMPUTER SOCIETY: "Draft Standard for Information technology- Tele- communications and information exchange between systems Local and metropolitan area networks- Specific requirements Part 11: Wireless LAN Medium Access Control (MAC) and Physical Layer (PHY) Specifications Amendment 1: Enhancements for High Efficiency", vol. 802.11ax drafts, no. D8.0, 1 November 2020 (2020-11-01), pages 1 - 820, XP068177051, Retrieved from the Internet <URL:http://www.ieee802.org/11/private/Draft_Standards/11ax/Draft%20P802.11ax_D8.0.pdf> [retrieved on 20201101]**

## Description

### TECHNICAL FIELD

This application relates to the field of communications technologies, and more specifically, to a method for packet extension, a device, a storage medium, and a computer program product.

### BACKGROUND

The wireless local area network (Wireless Local Area Network, WLAN) technology has evolved from the 802.11a/g, 802.11n, 802.11ac, and 802.11ax standards to the 802.11be standard. This comes with continuous increase of data throughput. From this perspective, the 802.11ax standard is also referred to as the high efficiency (High Efficiency, HE) wireless standard, and the 802.11be standard is also referred to as the extremely high throughput (Extremely High Throughput, EHT) wireless standard.

A physical layer protocol data unit (PHY Protocol Data Unit, PPDU) is a frame format widely used in a WLAN system, and may be used for data transmission between WLAN nodes such as an access point (AP) and a terminal device (STA). A node serving as a receiving device may have different processing capabilities for the PPDU. In an existing WLAN system, additional processing time for a PPDU may be provided to the receiving device through operations such as pre-FEC padding (Pre-Forward Error Correction padding, pre-FEC padding), post-FEC padding (post-FEC padding), and packet extension (Packet Extension, PE). Specifically, bits for pre-FEC padding and remaining information bits occupy about only a multiple of a quarter of subcarriers in a last symbol (for example, an OFDM symbol) in a data field of the PPDU, for example, may occupy a quarter, two quarters, three quarters, and all subcarriers. When subcarriers occupied through pre-FEC padding do not include all subcarriers of the symbol, decoding may be faster. Remaining subcarriers in the symbol may be padded with post-FEC padding bits, to provide additional processing duration.

Further, EP 4 277 175 A1 refers to a method for transmitting a TB PPDU in a wireless communication system. A Non-AP STA can receive a frame for triggering the transmission of a physical layer protocol data unit (PPDU) from an access point (AP), and transmit, in response to the frame, the PPDU including a packet extension (PE) field for providing a processing time for the PPDU. At this time, the frame indicates a format for the PPDU transmitted in response to the frame, and a maximum value of duration for the PE field can be changed according to the format of the PPDU indicated by the frame

Further, the document vol. 802.11 EHT; 802.11be, no. 2, March 11, 2021 refers to IEEE P 802.11 wireless LANs.

### SUMMARY

In general, example embodiments of this application provide a packet extension method and apparatus, and a computer-readable storage medium. This problem is solved by the subject matter of the independent claims. Further implementation forms are provided in the dependent claims.

The packet extension mechanism provided in embodiments of this application may be applied to various PPDUs transmitted between nodes in a WLAN system, for example, an MU PPDU, a TB PPDU solicited by a trigger frame, and a TB PPDU solicited by TRS. In this mechanism, different requirements for additional processing time can be met by configuring appropriate padding factors and PE values. Therefore, the optimized packet extension mechanism provided in this application can efficiently use network time-frequency resources and significantly improve network performance.

### BRIEF DESCRIPTION OF DRAWINGS

The foregoing and other features, advantages, and aspects of embodiments of this application become more obvious with reference to the accompanying drawings and with reference to the following detailed descriptions. In the accompanying drawings, same or similar reference numerals represent same or similar elements.

FIG. 1 is a schematic diagram of a packet padding mechanism in a conventional WLAN network;
FIG. 2 is a schematic diagram of an example network environment in which example embodiments of this application may be implemented;
FIG. 3 is a schematic diagram of an A-PPDU frame structure according to an example embodiment of this application;
FIG. 4 is a schematic diagram of a packet extension mechanism according to an example embodiment 1 of this application;
FIG. 5 is a schematic diagram of another packet extension mechanism according to an example embodiment 1 of this application;
FIG. 6 is a schematic diagram of operation parameters of a TRS-based TB PPDU according to an example embodiment of this application;

FIG. 7 is a diagram of signaling interaction of a communication mechanism according to an example embodiment of this application;

FIG. 8 is a flowchart of a communication method according to an example embodiment of this application;

FIG. 9 is a flowchart of a communication method according to an example embodiment of this application;

FIG. 10 is a diagram of signaling interaction of a communication mechanism according to an example embodiment of this application;

FIG. 11 is a flowchart of a communication method according to an example embodiment of this application;

FIG. 12A to FIG. 12C are schematic diagrams of communication apparatuses according to an example embodiment of this application; and

FIG. 13 is a block diagram of a communication device according to an example embodiment of this application.

## DESCRIPTION OF EMBODIMENTS

The following describes some example embodiments with reference to accompanying drawings. Although example embodiments of this application are shown in the accompanying drawings, it should be understood that this application may be implemented in various forms, and should not be construed as being limited to the embodiments described herein. Rather, these embodiments are provided so that this application will be thoroughly and completely understood. It should be understood that the accompanying drawings and embodiments of this application are merely used as examples, but are not intended to limit the protection scope of this application.

The technical solutions in embodiments of this application may be applied to a wireless local area network (Wireless Local Area Networks, WLAN for short) system, or may be applied to a communication system of another standard, for example, a Long Term Evolution (Long Term Evolution, LTE for short) system, a 5G system, or another future communication system. A WLAN system is used as an example. A station (Station, STA for short) and an access point (Access Point, AP for short) are basic components of the WLAN system. The AP is an access point used by a mobile user to access a wired network, and is mainly deployed within a home, a building, and a campus, with a typical coverage radius of a few dozen meters to a few hundred meters. Certainly, the AP may also be deployed outdoors. The AP is equivalent to a bridge that connects the wired network and a wireless network. A main function of the AP is to connect wireless network clients together, and then connect the wireless network to the Ethernet. Specifically, the AP may be an apparatus with a Wi-Fi (English: Wireless Fidelity, Chinese: Wireless Fidelity) chip, for example, a terminal device or a network device with a Wi-Fi chip. Optionally, the AP may be a device that supports the 802.11ax standard. Optionally, the AP may also be a device that supports a plurality of WLAN standards, such as 802.11ac, 802.11n, 802.11g, 802.11b, and 802.11a. Further, the AP may also be a device that supports 802.11be and a WLAN standard that supports another future 802.11 standard. A standard type supported by the AP is not limited in embodiments of this application.

The STA is generally a terminal device in a WLAN system. The STA may be movable or may be fixed, and is a most basic component device of a wireless local area network. The STA may be a wireless communication chip, a wireless sensor, or a wireless communications terminal, such as a mobile phone supporting a Wi-Fi communication function, a tablet computer supporting a Wi-Fi communication function, a set-top box supporting a Wi-Fi communication function, a smart television supporting a Wi-Fi communication function, a smart wearable device supporting a Wi-Fi communication function, an in-vehicle communications device supporting a Wi-Fi communication function, or a computer supporting a Wi-Fi communication function. Similarly, the STA may be a device that supports the 802.11ax standard, or the STA may be a device that supports a plurality of WLAN standards such as 802.11ac, 802.11n, 802.11g, 802.11b, and 802.11a. Further, the STA may also be a WLAN standard device that supports the 802.11be and another future 802.11 standard. A standard type supported by the STA is not limited in embodiments of this application.

The term "include" and variants thereof used in this specification indicate open inclusion, that is, "include but is not limited to". Unless otherwise stated, the term "or" means "and/or". The term "based on" means "at least partially based on". The terms "example embodiments" and "some embodiments" represent "at least one example embodiment". Other explicit and implicit definitions may also be included below.

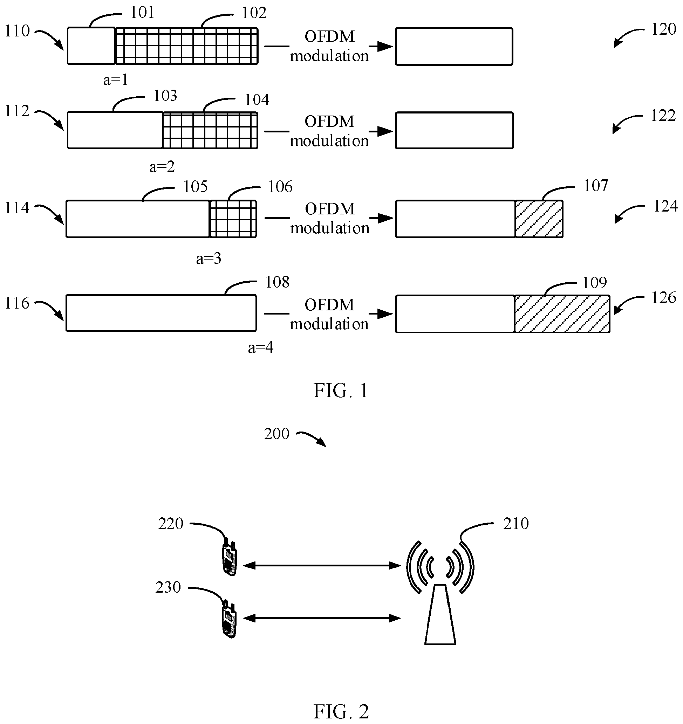

In a conventional WLAN system, various frame structures such as a PPDU, which is a physical layer frame format, may be transmitted between an access point and a station device. To reserve more time for processing the PPDU for a node acting as a receiving device, a sending device typically utilizes packet padding techniques such as pre-FEC padding, post-FEC padding, and PE. FIG. 1 is a schematic diagram of a packet padding mechanism used in a conventional WLAN network. Scrambling and OFDM encoding may be performed on information bits to obtain PPDUs 120 to 126, where a pre-FEC padding factor a represents a proportion of pre-FEC padding bits and remaining bits in each of symbols 110 to 116 in a data field after modulation. Remaining subcarriers in this symbol may be occupied by post-FEC padding bits so that a number of data subcarriers reaches $N_{CBPS}$ bits, where CBPS represents coded bits in each symbol (coded bits per symbol). Therefore, the pre-FEC padding factor a may also be used to indicate a proportion of post-FEC padding bits in the symbol in the data field of the PPDU. The post-FEC padding bits may provide additional processing duration for the receiving device.

As shown in FIG. 1, when the pre-FEC padding factor a = 1, pre-FEC padding bits 101 occupy a quarter of subcarriers, and post-FEC padding bits 102 occupy three quarters of subcarriers. Post-FEC padding bits 102 obtained through OFDM modulation may provide additional processing duration of about 12 μs. When the pre-FEC padding factor a = 2, pre-FEC padding bits 103 and post-FEC padding bits 104 separately occupy half of subcarriers. Post-FEC padding bits 104 obtained through OFDM modulation may provide additional processing duration of about 8 μs. When the pre-FEC padding factor a = 3, pre-FEC padding bits 105 occupy three quarters of subcarriers, and post-FEC padding bits 106 occupy a quarter of subcarriers. Post-FEC padding bits 106 obtained through OFDM modulation may provide additional processing duration of about 4 μs. When the pre-FEC padding factor a = 4, pre-FEC padding bits 108 occupy all subcarriers, and a quantity of post-FEC padding bits is zero. In this case, no additional processing duration is provided.

Because duration corresponding to the post-FEC padding bits is uncertain and is limited by total duration, in order that the provided additional processing time can meet a requirement of the receiving device (e.g., 8 μs and 16 μs), a PE field may be introduced after the last symbol to further provide processing time. In FIG. 1, it is assumed that the receiving device requires additional processing duration that is not less than 8 μs. When the pre-FEC padding factor a is 1 or 2, because the post-FEC padding bits can provide sufficient additional processing duration, the PE field does not need to be added. When the pre-FEC padding factor a is 3, a PE field 107 corresponding to 4 μs needs to be added after the symbol; when the pre-FEC padding factor a is 4, a PE field 109 corresponding to 8 μs needs to be added after the symbol.

With the development of wireless communication technologies, there already is an EHT device that requires additional processing time that is greater than 16 μs (for example, 20 μs). In this case, the node acting as the sending device may add a PE field corresponding to 20 μs to the PPDU for the EHT device. When the sending device sends an A-PPDU obtained through aggregation to both an HE device and an EHT device, in a conventional packet extension mechanism, a PE field not exceeding 16 μs is configured for a PPDU for the HE device, and a PE field not exceeding 20 μs is configured for a PPDU for the EHT device. As a result, ends of the two types of PPDUs are unequal in length, which is unfavorable to data sending and receiving.

To resolve the foregoing problem and another potential problem that occur in the current WLAN system, an embodiment of this application provides an optimized packet extension mechanism. In the packet extension mechanism, padding bits and a PE field in a data field of a PPDU may be flexibly configured based on a requirement, to meet different requirements of an HE device and an EHT device for additional processing time. In addition, in this mechanism, PE fields in PPDUs for the HE device and the EHT device have a same length, so that end points of the PE fields of an A-PPDU including the PPDUs for the HE device and the EHT device can be aligned. The PPDU generated in this manner can efficiently use a time-frequency resource of a WLAN network, thereby significantly improving network performance and ensuring communication quality.

Example packet extension mechanisms according to embodiments of this application will be discussed below with reference to FIG. 2 to FIG. 10.

FIG. 2 is a schematic diagram of an example network environment 200 in which example embodiments of this application may be implemented. As shown in FIG. 2, the network environment 200 includes an access device 210 and station devices 220 and 230. It should be understood that the network environment 200 is intended only for exemplary purposes and does not imply any limitation on the scope of this application. Embodiments of this application may further be embodied in another network environment or architecture. In addition, it should also be understood that the network environment 200 may further include other elements or entities for purposes such as communication connection, data transmission, and network security. For brevity of description, these elements or entities are not shown in FIG. 2, but this does not mean that embodiments of this application do not have these elements or entities.

The access device 210 may provide wireless network coverage for the station devices 220 and 230 in a specific area. The access device 210 may communicate with one or more of the station devices 220 and 230, which is also referred to as downlink data transmission. Downlink data transmission may be point to multi-point transmission, or may be point to point transmission. For example, the access device 120 may send a downlink physical layer protocol data unit DL PPDU to the station devices 220 and 230, including but not limited to a downlink single-user physical layer protocol data unit (Downlink Single User PHY Protocol Data Unit, DL SU PPDU) or a downlink multi-user physical layer protocol data unit (Downlink Multi-User PHY Protocol Data Unit, DL MU PPDU). In an example embodiment of this application, a TB PPDU may include a trigger-based PPDU, a TRS-based PPDU, or a combination thereof.

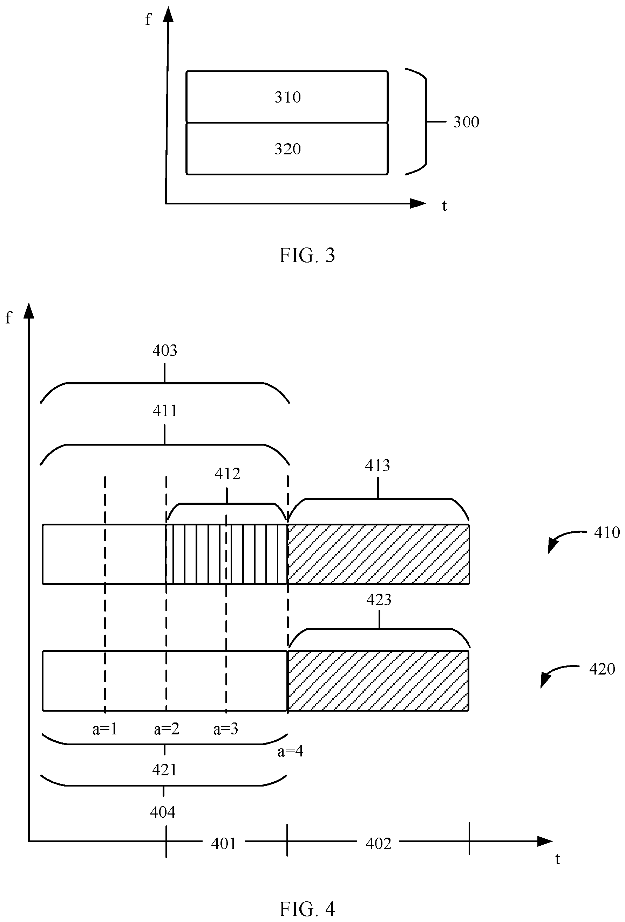

In an embodiment of point to multi-point transmission, the access device 120 may transmit an A-PPDU to the station devices 220 and 230. For example, the A-PPDU may be a PPDU for an HE device and a PPDU for an EHT device that are sent in an orthogonal manner in frequency domain. FIG. 3 is a schematic diagram of an A-PPDU frame structure according to an example embodiment of this application. In FIG. 3, for example, an A-PPDU 300 may include a PPDU 310 for an EHT device and a PPDU 320 for an HE device. The PPDU 310 and the PPDU 320 correspond to different subcarriers in frequency domain, and use a same time domain resource. The EHT device and the HE device may respectively receive the PPDU 310 and the PPDU 320 on corresponding subcarriers.

Data transmission from the station device 220 or the station device 230 to the access device 210 may be referred to as uplink data transmission. The station device 220 and the station device 230 may communicate with each other. In an example embodiment of this application, the station device 220 may correspond to an EHT device, and the station device 230 may correspond to an HE device. When the station device 220 and the station device 230 serve as receiving devices for data transmission, different processing duration may be required for the PPDUs. In some example embodiments of this application, the access device 210 may act as a sending device, and one or more of the station device 220 and the station device 230 may act as a receiving device. In some other example embodiments of this application, the access device 210 may serve as a receiving device, and one or more of the station device 220 and the station device 230 may serve as a sending device.

It should be understood that terms "HE device" and "EHT device" used in this application correspond to naming manners of devices in current 802.11a/g, 802.11n, 802.11ac, and 802.11ax to current 802.11be. However, embodiments of this application are also applicable to same or equivalent devices in future or subsequent standards. The scope of this application is not limited in this respect.

The network environment 200 according to this embodiment of this application may be a wireless network that complies with any currently known or future protocol, including but not limited to a WLAN based on standards such as 802.11ac, 802.11n, 802.11g, 802.11b, and 802.11a, a Narrowband Internet of Things (Narrow Band-Internet of Things, NB-IoT) system, a Global Mobile communication (Global System for Mobile Communications, GSM) system, an Enhanced Data Rate GSM Evolution (Enhanced Data rate for GSM Evolution, EDGE) system, a Wideband Code Division Multiple Access (Wideband Code Division Multiple Access, WCDMA) system, a Code Division Multiple Access 2000 (Code Division Multiple Access, CDMA2000) system, a Time Division Synchronous Code Division Multiple Access (Time Division-Synchronization Code Division Multiple Access, TD-SCDMA) system, a Long Term Evolution (Long Term Evolution, LTE) system, and a 5G NR network.

## Example embodiment 1

The non-claimed example embodiment 1 of this application provides a packet extension mechanism for an A-PPDU. The mechanism may include the access device 210 and the station devices 220 and 230 shown in FIG. 2. The following describes the example embodiment 1 with reference to FIG. 2. However, it should be understood that the mechanism is also applicable to other communication scenarios and devices.

It should be noted that the A-PPDU in this application includes at least two PPDUs sent on different frequency domain resources. For example, the A-PPDU includes two PPDUs. The two PPDUs may be both EHT PPDUs, or may be both HE PPDUs, or may be an EHT PPDU and an HE PPDU. A specific combination of the A-PPDU and a quantity of PPDUs included in the A-PPDU are not limited in this application. For ease of description, for description of a first PPDU and a second PPDU included in the A-PPDU, an example in which the first PPDU is an EHT PPDU, that is, a PPDU for an EHT device, and the second PPDU is an HE PPDU, that is, a PPDU for an HE device is used in the following.

In the embodiment 1, the access device 210 may transmit the A-PPDU to the station devices 220 and 230. As an example, the A-PPDU may include the first PPDU for the station device 220 and the second PPDU for the station device 230. In this example, the access device 210 serves as a sending device, and the station devices 220 and 230 serve as receiving devices. In addition, the first PPDU may be a MU PPDU, and the second PPDU may be a single user physical layer protocol data unit (Single User PHY Protocol Data Unit, SU PPDU) or a MU PPDU.

In another example, the A-PPDU may be a trigger-based physical layer protocol data unit (Trigger-Based PHY Protocol Data Unit, TB PPDU), for example, a TB PPDU solicited by a trigger frame. In this example, the access device 210 may send, to the station device 220, a PPDU that carries a trigger frame. In response to the trigger frame, the station device 220 may send an A-PPDU including a first PPDU and a second PPDU.

As described in the foregoing description about FIG. 2, for example, the station device 220 corresponds to the EHT device, and the station device 230 corresponds to the HE device. The station device 220 and the station device 230 require different additional processing duration when receiving the PPDU. To provide sufficient processing duration for the station devices 220 and 230, the access device 210 may include post-FEC padding bits and a PE field of an appropriate length in the PPDUs for the EHT device and the HE device.

For example, the access device 210 may determine a pre-FEC padding factor a and a nominal packet padding value based on processing capabilities of the station devices 220 and 230. In the context of this application, the nominal packet padding value may indicate minimum additional processing duration required for processing a corresponding PPDU, and a value of the nominal packet padding value includes 0, 8, 16, and 20 $\mu$s. Based on the pre-FEC padding factor a and the nominal packet padding value, nominal PE duration $T_{nominal, PE}$, namely, minimum packet extension duration to be provided by a PE field required by a receiving device may be determined. Table 1 below shows nominal PE duration $T_{nominal, PE}$ determined based on different padding factors a and nominal packet padding values.

Table 1 - Nominal PE duration $T_{nominal,\ PE}$

| Padding factor a | Nominal packet padding value | | | |
|---|---|---|---|---|
| | 0 $\mu$s | 8 $\mu$s | 16 $\mu$s | 20 $\mu$s |
| 1 | 0 $\mu$s | 0 $\mu$s | 4 $\mu$s | 8 $\mu$s |
| 2 | 0 $\mu$s | 0 $\mu$s | 8 $\mu$s | 12 $\mu$s |
| 3 | 0 $\mu$s | 4 $\mu$s | 12 $\mu$s | 16 $\mu$s |
| 4 | 0 $\mu$s | 8 $\mu$s | 16 $\mu$s | 20 $\mu$s |

Therefore, a processing requirement of the receiving device can be met provided that a finally selected PE duration $T_{PE}$ is not less than nominal PE duration $T_{nominal,\ PE}$.

In an A-PPDU transmission scenario, a maximum nominal packet padding value (also referred to as predefined PE duration) required by the HE device is 16 $\mu$s, and the EHT device may require predefined PE duration up to 20 $\mu$s. In an example in which the A-PPDU includes the MU PPDU, when the station device 220 needs predefined PE duration $T_{nominal,\ PE\ 1}$ of 20 $\mu$s, supported predefined PE duration of the station device 230 acting as the HE device, that is, 16 $\mu$s, is exceeded. In this case, if first PE duration $T_{PE\ 1}$ of 20 $\mu$s is still configured for the first PPDU of the station device 220, and second PE duration $T_{PE\ 2}$ of 16 $\mu$s is configured for the second PPDU of the station device 230, because the first PPDU and the second PPDU that are transmitted in an aggregated manner include PE fields of different lengths, end points of the PE fields of the A-PPDU are not aligned. It should be understood that "supported predefined PE duration" used in this application may be PE duration of 0 $\mu$s, 8 $\mu$s, 16 $\mu$s, or the like required by the HE device, for example, may be maximum predefined PE duration supported by the HE device, that is, 16 $\mu$s.

To avoid such a problem of non-alignment during A-PPDU transmission, the access device 210 may configure an appropriate first pre-FEC padding factor $a_1$ for the first PPDU, an appropriate second pre-FEC padding factor $a_2$ for the second PPDU, and target PE duration $T_{PE}$ while ensuring that the first PPDU for the station device 220 and the second PPDU for the station device 230 include target PE fields of a same length. In this way, additional processing duration provided by the target PE field and post-FEC padding bits may still meet processing requirements of the station devices 220 and 230.

It should be noted that, in the context of this application, predefined PE duration $T_{nominal,\ PE}$ is additional processing duration required by the receiving device, and target PE duration $T_{PE}$ is PE duration corresponding to PE fields actually included in the A-PPDU, that is, PE duration actually corresponding to the PE fields of the first PPDU and the second PPDU. First padding bits are post-FEC padding bits in the first PPDU, and may be determined based on the first pre-FEC padding factor $a_1$. Second padding bits are post-FEC padding bits in the second PPDU, and may be determined based on the second pre-FEC padding factor $a_2$.

Specifically, in an example in which the A-PPDU is transmitted and a predefined PE duration $T_{nominal,\ PE\ 1}$ required for the first PPDU of the station device 220 is 20 $\mu$s, the access device 210 may determine the first pre-FEC padding factor $a_1$ and the target PE duration $T_{PE}$ for the first PPDU according to the following configuration:

• the target PE duration $T_{PE}$ is 16 $\mu$s, and a value of the first pre-FEC padding factor $a_1$ is one of 1, 2, and 3;
• the target PE duration $T_{PE}$ is 12 $\mu$s, and a value of the first pre-FEC padding factor $a_1$ is one of 1 and 2; or
• the target PE duration $T_{PE}$ is 8 $\mu$s, and a value of the first pre-FEC padding factor $a_1$ is 1.

In the foregoing configuration, a value of the second pre-FEC padding factor $a_2$ may be one of 1, 2, 3, and 4. For example, one of predefined values 1, 2, 3, and 4 may be selected as the value of the second pre-FEC padding factor $a_2$ based on predefined PE duration $T_{PE\ 2}$ required for the second PPDU. When the second pre-FEC padding factor $a_2$ is one of 1, 2, or 3, a symbol in a data field of the second PPDU further includes post-FEC padding bits, which are also referred to as the second padding bits in embodiments of this application. In other words, when the second pre-FEC padding factor $a_2$ is 4, a data field of the second PPDU does not include a post-FEC padding bit, or a post-FEC padding bit does not exist, or a quantity of post-FEC padding bits is 0.

FIG. 4 is a schematic diagram of a packet extension mechanism according to the example embodiment 1 of this application. In the example in FIG. 4, a first pre-FEC padding factor $a_1$ for the station device 220 is 2, and generated first padding bits 412 are located in a last symbol 411 in a data field of a first PPDU 410, and provide processing duration 401 of about 8 $\mu$s. A second pre-FEC padding factor $a_2$ for the station device 230 is 4. Therefore, a quantity of second padding bits included in a last symbol 421 in the data field of the second PPDU 420 is zero. In addition, the first PPDU 410 and the second PPDU 420 further include PE fields 413 and 423 of an equal length, which correspond to processing duration 402 of 12 $\mu$s. According to the foregoing configuration, for the first PPDU, a sum of the processing duration 401 and 402 meets the predefined PE duration $T_{nominal,\ PE\ 1}$ of 20 $\mu$s required by the station device 220, and PE fields of the A-PPDU can be kept aligned.

It should be understood that, although in the example in FIG. 4, the value of the first pre-FEC padding factor $a_1$ is different from the value of the second pre-FEC padding factor $a_2$, in some other examples, the value of the first pre-FEC padding factor $a_1$ may be the same as the value of the second pre-FEC padding factor $a_2$.

In a specific implementation process, the first pre-FEC padding factor $a_1$, the second pre-FEC padding factor $a_2$, and the target PE duration $T_{PE}$ may be flexibly determined based on a requirement. As an example, the target PE duration $T_{PE}$ may be determined based on the selected first pre-FEC padding factor $a_1$ and second pre-FEC padding factor $a_2$. In another example, the target PE duration $T_{PE}$ may be first selected from a predefined value range of 8 $\mu$s, 12 $\mu$s, and 16 $\mu$s, and then the first pre-FEC padding factor $a_1$ that meets the first predefined PE duration $T_{PE\,1}$, and the second pre-FEC padding factor $a_2$ that meets the second predefined PE duration $T_{PE\,2}$, are determined based on the selected target PE duration $T_{PE}$.

In a possible implementation, the target PE duration $T_{PE}$ is equal to the predefined PE duration $T_{PE'}$, that is,

$$T_{PE\,1} = T_{nominal,\,PE\,1} \quad (1)$$

and

$$T_{PE\,2} = T_{nominal,\,PE\,2} \quad (2)$$

Based on the foregoing formulas (1) and (2), the first pre-FEC padding factor $a_1$, the second pre-FEC padding factor $a_2$, and the target PE duration $T_{PE}$ may be determined according to the following configuration. In other words, the first pre-FEC padding factor $a_1$, the second pre-FEC padding factor $a_2$, and the target PE duration TPE may be configured as follows:

- the target PE duration $T_{PE}$ is 16 $\mu$s, the value of the first pre-FEC padding factor $a_1$ is 3, and the value of the second pre-FEC padding factor $a_2$ is 4;
- the target PE duration $T_{PE}$ is 12 $\mu$s, the value of the first pre-FEC padding factor $a_1$ is 2, and the value of the second pre-FEC padding factor $a_2$ is 3; or
- the target PE duration $T_{PE}$ is 8 $\mu$s, the value of the first pre-FEC padding factor $a_1$ is 1, and the value of the second pre-FEC padding factor $a_2$ is 2 or 4.

In another possible implementation, the target PE duration $T_{PE}$ is equal to predefined PE duration $T_{nominal,\,PE\,2}$ for HE, and predefined PE duration $T_{nominal,\,PE\,1}$ for EHT is not limited thereto. In other words, predefined PE duration $T_{nominal,\,PE\,1}$ for EHT may not be equal to the predefined PE duration $T_{nominal,\,PE\,1}$. In this case, the first pre-FEC padding factor $a_1$, the second pre-FEC padding factor $a_2$, and the target PE duration $T_{PE}$ may be determined according to the following configuration. In other words, the first pre-FEC padding factor $a_1$, the second pre-FEC padding factor $a_2$, and the target PE duration $T_{PE}$ may be configured as follows:

- the target PE duration is 16 $\mu$s, the value of the first pre-FEC padding factor is one of 1, 2, and 3, and the value of the second pre-FEC padding factor is 4;
- the target PE duration is 12 $\mu$s, the value of the first pre-FEC padding factor is one of 1 and 2, and the value of the second pre-FEC padding factor is 3; or
- the target PE duration is 8 $\mu$s, the value of the first pre-FEC padding factor is 1, and the value of the second pre-FEC padding factor is 2 or 4.

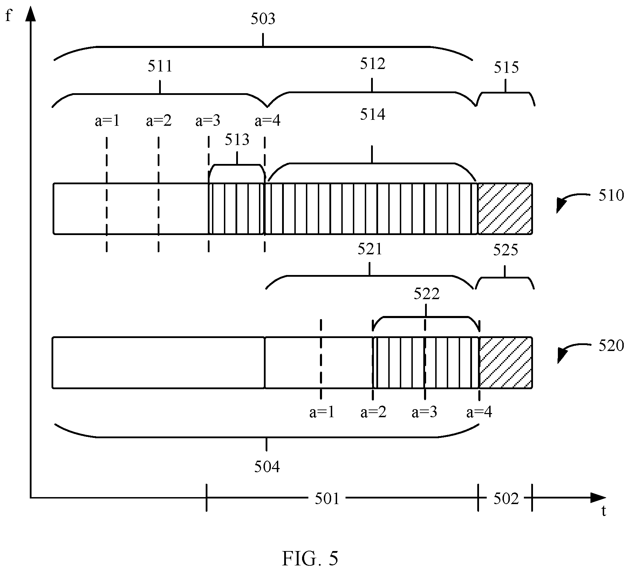

FIG. 5 is a schematic diagram of another packet extension mechanism according to the example embodiment 1 of this application. In the example in FIG. 5, a second pre-FEC padding factor $a_2$ for the station device 230 is 2, and generated second padding bits 522 are located in a last symbol 521 in a data field 504 of a second PPDU 520, and provide processing duration of about 8 $\mu$s. For a first PPDU 510, a first pre-FEC padding factor $a_1$ 3, and generated first padding bits include a first part 513 located in a symbol 511 and a second part 514 located in a last symbol 512 in a data field 503 of the first PPDU 510. The first part 513 and the second part 514 of the first padding bits provide processing duration 501 of about 20 $\mu$s in total. It should be understood that, that a first symbol shown in FIG. 5 is the penultimate symbol in the data field of the first PPDU is merely an example. The first symbol may be any symbol before the last symbol in the data field of the first PPDU. This is not limited in this application. In a configuration in which the first symbol is a symbol before the last symbol, all symbols from a symbol following the first symbol to the last symbol are padded with padding bits, that is, all the symbols from the symbol following the first symbol to the last symbol are post-FEC padding bits. In some cases, these bits may alternatively be used as a PE field. In addition, the first PPDU 510 and the second PPDU 520 further include PE fields 515 and 525 of an equal length, which correspond to processing duration 502 of 4 $\mu$s. Therefore, for the first PPDU, a sum of the processing duration 501 and the processing duration 502 has exceeded the predefined PE duration $T_{nominal, PE\ 1}$ of 20 $\mu$s required by the station device 220, and can meet a requirement of the EHT device. In addition, the PE fields in the A-PPDU can be aligned.

In some examples, for an A-PPDU, the configuration of the pre-FEC padding factor a corresponding to the penultimate symbol in the data field of the PPDU for an EHT device as shown in FIG. 5 may be used, while for other PPDUs, a conventional configuration of the pre-FEC padding factor corresponding to the last symbol of the data field of the corresponding PPDU may still be used. In such an example, the station device 220 serving as a receiving device may determine whether a received PPDU is an A-PPDU to determine a symbol in a data field corresponding to the pre-FEC padding factor, that is, a location of first padding bits in the data field of the first PPDU. In other words, when determining that the received PPDU is an A-PPDU, the station device 220 may determine the location of the first padding bits in the data field of the first PPDU. Whether the first padding bits are in the penultimate symbol or any symbol before the last symbol of the data field may be agreed on in a protocol, or may be notified through communication between the station device and the access device. This is not limited in this application.

In the foregoing example, the first PPDU may further include a first indicator for indicating that the PPDU is an A-PPDU, for example, an indicator with a length of one bit. Further, the station device 220 may determine, based on the first indicator, that the first pre-FEC padding factor $a_1$ corresponds to the last symbol of the data field or any symbol before the last symbol. In addition or alternatively, in the configuration of the first pre-FEC padding factor $a_1$ corresponding to the penultimate symbol of the data field, when the last symbol of the data field may be used to provide additional processing of about 16 $\mu$s, and the target PE duration $T_{PE}$ is not less than 4 $\mu$s, the value of the first pre-FEC padding factor $a_1$ may be 4, that is, the penultimate symbol in the data field does not have padding bits (Post-FEC padding bits), and all bits in the last symbol are padding bits (Post-FEC padding bits). Therefore, the station device 220 may determine, based on that the received PPDU is an A-PPDU, whether the value of the first pre-FEC padding factor $a_1$ is 4.

In some examples, a maximum nominal packet padding value for an A-PPDU may be set to 16 $\mu$s, so that when the access device 210 transmits an A-PPDU, a problem that end points of PE fields of the A-PPDU are not aligned does not occur.

A case in which the A-PPDU is a TB PPDU solicited by a trigger frame is also applicable to a packet extension mechanism described in the example embodiment 1 of this application. Specifically, in this example, the access device 210 determines, based on information that is used for packet extension and that is described in the example embodiment 1, a length of a PE field that should be carried in the TB PPDU to be triggered. Then, the access device 210 may send a trigger frame to the station devices 220 and 230. A common information field in the trigger frame, for example, an uplink length subfield (UL Length subfield) or a packet extension disambiguity (PE Disambiguity) subfield, includes information for indicating the length of the PE field to be carried in the TB PPDU to be triggered.

In an example of a TB PPDU solicited by a trigger frame, the trigger frame may further indicate a first pre-FEC padding factor $a_1$ for the first PPDU and a second pre-FEC padding factor $a_2$ for the second PPDU. In an example of a PPDU based on triggered response scheduling TRS, a first pre-FEC padding factor $a_1$ for a first PPDU and a second pre-FEC padding factor $a_2$ for a second PPDU may be complied with a default value or a predefined value, and therefore a trigger frame carrying TRS may not need to indicate the first pre-FEC padding factor $a_1$ and the second pre-FEC padding factor $a_2$. The station devices 220 and 230 have a capability of sending a first PPDU for an EHT device and a second PPDU for an HE device, respectively. Further, the station devices 220 and 230 may determine target PE duration based on these subfields in the trigger frame, and generate and send the first PPDU and the second PPDU in response to the trigger frame. All features described above about the A-PPDU including MU PPDUs are applicable to the scenario in which the A-PPDU is a trigger based TB PPDU, and therefore details are not described herein again.

It should be understood that, in the example embodiment of this application, A-PPDU alignment is implemented by adjusting the pre-FEC padding factor a and the length of the PE field, this adjustment manner is merely an example, and a nominal packet padding value or a PE field corresponding to 20 $\mu$s may be provided in the A-PPDU by adding padding bits of another part. For example, padding bits in a MAC frame, a padding field in a trigger frame, post-end-of-frame aggregate MAC protocol data unit padding (post-EOF A-MPDU padding), and aggregation of another MPDU in the A-MPDU may be used.

According to the method provided in embodiments of this application, an optimized packet extension mechanism may be implemented. In this mechanism, PE fields in PPDUs that are included in the A-PPDU and that are for an HE device and an EHT device have a same length, so that end points of the PE fields of the A-PPDU can be aligned. In addition, the A-PPDU may provide sufficient additional processing duration for the HE device and the EHT device separately by using post-FEC padding bits and PE fields. According to the optimized packet extension mechanism, padding bits and a PE field in a data field of a PPDU may be flexibly configured based on a requirement. An A-PPDU generated in this way can efficiently use a time-frequency resource of a WLAN network, significantly improve network performance, and provide communication quality.

**Example embodiment 2**

Triggered response scheduling TRS may be considered as a simplified and efficient implementation of a trigger frame, and many parameters are set by default or simplified. Compared with a TB PPDU solicited by a trigger frame, a TB PPDU solicited by TRS supports fewer or fixed modulation schemes and quantities of spatial flows. For example, a default value of a pre-FEC padding factor a of a TB PPDU solicited by TRS is 4. In other words, in the TB PPDU solicited by TRS, no post-FEC padding bit is provided by default.

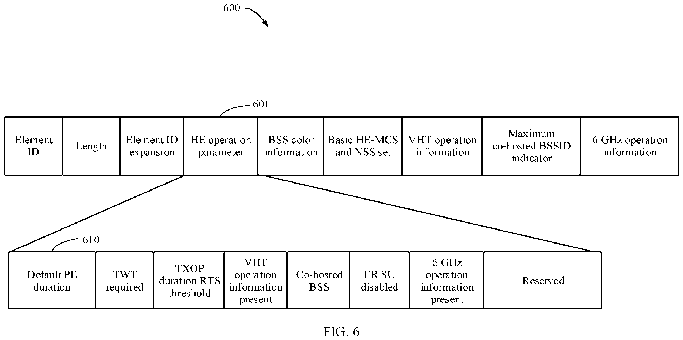

Further, in a scenario in which a TB PPDU solicited by TRS is transmitted, predefined PE duration is specified by operation parameters for an HE device and an EHT device. FIG. 6 is a schematic diagram of operation parameters of a TRS-based TB PPDU according to an example embodiment of this application. The access device 210 may set predefined PE duration by configuring an operation parameter for an HE device, for example, a default PE duration (Default PE Duration) subfield 610 in an HE operation parameter field (HE Operation Parameters Field) 601 in an operation element (HE Operation Element) for the HE device shown in FIG. 6. The default PE duration subfield 610 includes 3 bits. When values of the default PE duration subfield 610 are 0 to 4, the values of the default PE duration subfield 610 respectively correspond to predefined PE duration 0, 4, 8, 12, and 16 $\mu$s, and values of 5 to 7 are reserved values. Therefore, when the EHT device requires predefined PE duration of up to 20 $\mu$s, a conventional TRS-based TB PPDU transmission mechanism cannot be used to transmit the A-PPDU including PPDUs for the EHT device and the HE device.

The non-claimed example embodiment 2 of this application provides a packet extension mechanism for a TRS-based A-PPDU. The mechanism may include the access device 210 and the station devices 220 and 230 shown in FIG. 2. For example, the following describes the example embodiment 2 with reference to FIG. 2. However, it should be understood that the mechanism is also applicable to other communication scenarios and devices.

In the example embodiment 2, the A-PPDU transmitted between the access device 210 and the station devices 220 and 230 may be a TRS-based TB PPDU, or a TB PPDU solicited by TRS and a trigger frame in hybrid transmission. For the TB PPDU solicited by TRS and the trigger frame in hybrid transmission, configuration of the trigger frame should be consistent with configuration of TRS and comply with configuration parameters of TRS. Therefore, a case in which hybrid transmission of TRS and the trigger frame is not explicitly mentioned in the following may also be understood as complying by default with a design manner for the TRS described in the example embodiment 2.

In a possible implementation, to adapt to the predefined PE duration required by the EHT device, for example, 20 $\mu$s, the following default configurations may be used in the TRS mechanism provided in the example embodiment 2:

- a pre-FEC padding factor a corresponds to a last symbol in a data field in the PPDU, and a predefined value is one of 1, 2, and 3; or
- a pre-FEC padding factor a corresponds to a symbol before a last symbol in a data field in the PPDU, and a predefined value is one of 1, 2, 3, and 4.

In the foregoing configuration, when the EHT device requires predefined PE duration of 20 $\mu$s, default PE duration in an EHT operation parameter (EHT Operation Parameters Field) field may be set to not greater than 16 $\mu$s.

In the TRS mechanism provided in the example embodiment 2, for the A-PPDU, a configuration in which the pre-FEC padding factor a corresponds to the last symbol in the data field of the PPDU and the predefined value is one of 1, 2, or 3, or the pre-FEC padding factor a corresponds to any symbol before the last symbol in the data field of the PPDU and the predefined value is one of 1, 2, 3, or 4 may be used. For a PPDU other than an A-PPDU, the access device 210 may still use a conventional configuration in which a pre-FEC padding factor a corresponds to a last symbol in a data field of the corresponding PPDU and the value is 4.

In addition or alternatively, for the A-PPDU, whether the value of the pre-FEC padding factor a of the PPDU for the EHT device is a predefined value or 4 may be determined based on a second indicator whose length is 1 bit. For example, a first value of the second indicator may indicate that the value of the pre-FEC padding factor a is 4, and a second value of the second indicator may indicate that the pre-FEC padding factor a uses the predefined value described above.

In addition or alternatively, for a PPDU corresponding to the EHT device (that is, the first PPDU described above) in the A-PPDU, an operation parameter that is the same as the PPDU corresponding to the HE device (that is, the second PPDU described above) may be used by default.

According to the example embodiment 2 of this application, the packet extension mechanism for the TRS-based TB PPDU is provided. In this mechanism, different requirements of the EHT device and the HE device for additional processing time can be met by configuring the appropriate padding factor a and PE duration. In addition, when the mechanism is used to transmit the A-PPDU, end points of PE fields in the A-PPDU can be aligned. Therefore, the optimized packet extension mechanism provided in this application can efficiently use network time-frequency resources and significantly improve network performance.

## Example embodiment 3

The example embodiment 3 of this application provides a packet extension mechanism for a TB PPDU solicited by TRS. The mechanism may include the access device 210 and the station device 220 shown in FIG. 2. For example, the following describes the example embodiment 3 with reference to FIG. 2. However, it should be understood that the mechanism is also applicable to other communication scenarios and devices.

In the example embodiment 3, a first PPDU transmitted between the access device 210 and the station device 220 may be a TB PPDU solicited by TRS, or a TB PPDU solicited by TRS and a trigger frame in hybrid transmission. For the TB PPDU solicited by TRS and the trigger frame in hybrid transmission, configuration of the trigger frame should be consistent with configuration of TRS and comply with configuration parameters of TRS. Therefore, a case in which hybrid transmission of TRS and the trigger frame is not explicitly mentioned in the following may also be understood as complying by default with a design manner for the TRS described in the example embodiment 3.

To adapt to predefined PE duration required by an EHT device, for example, 20 $\mu$s, the access device 210 may indicate PE duration for the EHT device by using an EHT operation parameter element. For example, the access device 210 may send, to the station device 220, a third PPDU including the EHT operation parameter. The EHT operation parameter may include a third indicator for indicating the PE duration.

In some example embodiments, the third indicator may be an indicator with a length of 1 bit, for example, a first value (for example, 1) of the third indicator indicates that the PE duration is 20 $\mu$s, and a second value (for example, 0) of the third indicator indicates that the PE duration for EHT is duration specified by an HE operation parameter, that is, the PE duration complies with a configuration in a default PE duration subfield (Default PE Duration subfield) in an HE operation parameter field (HE Operation Parameters field).

In some other example embodiments, a first value of the third indicator may indicate either of 16 $\mu$s and 20 $\mu$s, and a second value of the third indicator may indicate that the PE duration for the EHT complies with a configuration in a default PE duration subfield in an HE operation parameter field.

In such an embodiment, the third PPDU is a PPDU that carries the EHT operation parameter. The PE duration may be further determined based on a fourth PPDU that carries trigger response scheduling TRS. In other words, the station device determines, based on the EHT operation parameter carried in the third PPDU, that the PE duration is 16 $\mu$s or 20 $\mu$s, and further determines, based on indication information carried in the fourth PPDU, that the PE duration is 16 $\mu$s or 20 $\mu$s. For example, the access device 210 may send a fourth PPDU to the station device 220, where the fourth PPDU may indicate bandwidth information for the fourth PPDU. When the fourth PPDU is transmitted in a form of an A-PPDU, the fourth PPDU may also indicate a bandwidth for the A-PPDU. In other words, the fourth PPDU is a part of the A-PPDU. In this case, the fourth PPDU may indicate an entire bandwidth for the A-PPDU. If the bandwidth for the fourth PPDU is greater than a first threshold (for example, 160 MHz), the station device 220 may determine that the PE duration is 20 $\mu$s. Alternatively, if the bandwidth for the fourth PPDU is less than or equal to a first threshold, the station device 220 may determine that the PE duration is 16 $\mu$s. In other words, when the third indicator is the first value, the station device 220 needs to further determine, based on the bandwidth information in the fourth PPDU, whether the PE duration is 16 $\mu$s or 20 $\mu$s.

In some example embodiments, the EHT operation parameter and the HE operation parameter may be carried in a same PPDU, or may be carried in different PPDUs. For example, the HE operation parameter may be carried in the third PPDU, the fourth PPDU, or another PPDU other than the third PPDU and the fourth PPDU.

In addition or alternatively, the PE duration may be further determined based on resource allocation information indicated by the fourth PPDU that carries the trigger frame. For example, the fourth PPDU sent by the access device 210 to the station device 220 may indicate a resource unit RU size for the fourth PPDU. If the fourth PPDU indicates that the RU size is greater than a second threshold size (for example, 2*996-tone RU), the station device 220 may determine that the PE duration is 20 $\mu$s. Alternatively, if the fourth PPDU indicates that the RU size is less than or equal to a second threshold size, the station device 220 may determine that the PE duration is 16 $\mu$s. In other words, when the third indicator is the first value, the station device 220 needs to further determine, based on the RU size indicated in the fourth PPDU, whether the PE duration is 16 $\mu$s or 20 $\mu$s. In some example embodiments, the third PPDU and the fourth PPDU may be the same PPDU.

In some other embodiments, the third indicator may be an indicator with a length greater than 1 bit, and the third indicator indicates that the PE duration is one of 0 $\mu$s, 4 $\mu$s, 8 $\mu$s, 12 $\mu$s, 16 $\mu$s and 20 $\mu$s. For example, the default PE duration subfield in the EHT operation parameter field includes 3 bits. When a value of the default PE duration subfield is 0 to 5, the default PE duration subfield corresponds to 0 $\mu$s, 4 $\mu$s, 8 $\mu$s, 12 $\mu$s, 16 $\mu$s and 20 $\mu$s respectively.

It should be understood that specific settings of the first value and the second value of the third indicator in the example embodiment 3 are merely for description. In other embodiments, the first value of the third indicator may be 0, and the second value may be 1. In addition, indication information of the PE duration for the EHT may be carried in another field or subfield, for example, B18 to B23 of the HE operation parameter field.

According to the method provided in this embodiment of this application, processing duration provided by the PE field may be flexibly set to 0 μs, 4 μs, 8 μs, 12 μs, 16 μs or 20 μs based on a requirement for the TB PPDU solicited by TRS, to meet different requirements of different devices for additional processing duration. In addition, in the method, a processing time of 16 μs or 20 μs may be further dynamically selected based on a network bandwidth or a resource unit size, thereby improving a conventional packet extension mechanism and improving performance of a WLAN system.

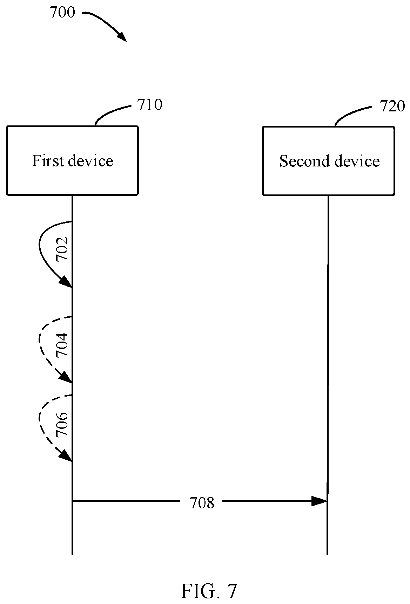

FIG. 7 is a diagram of signaling interaction of a communication mechanism according to an example embodiment of this application. An example interaction process 700 may include the access device 210 and the station device 220 as shown in FIG. 2. It should be understood that this process is also applicable to another communication scenario and device.

The following describes the process 700 by using an example in which the access device 210 acts as a first device 710, the station device 220 acts as a second device 720, and a TB PPDU is transmitted between the first device 710 and the second device 720. It should be understood that the process 700 is also applicable to a case in which an A-PPDU including a PPDU (SU PPDU or MU PPDU) for an HE device and an MU PPDU for an EHT is transmitted between the first device 710 and the second device 720.

In 702, the first device 710 determines, based on first PE duration for a first PPDU and second PE duration for a second PPDU, third PE duration for the to-be-triggered A-PPDU. The to-be-triggered A-PPDU includes the first PPDU for an EHT device and the second PPDU for an HE device.

The first PE duration may indicate duration of a predefined PE field required for the first PPDU, and the second PE duration is less than the first PE duration and indicates PE duration supported by the second PPDU. When determining that the first PE duration exceeds maximum PE duration supported by the second PPDU, the first device 710 may adjust a PE field length in the first PPDU and a PE field length in the second PPDU to equal target PE fields of the first PPDU and the second PPDU in length, to obtain an A-PPDU whose PE fields are aligned. A third PE duration corresponds to the target PE field, and does not exceed the second PE duration.

In addition, to enable the generated first PPDU and second PPDU to still meet a requirement for addition processing duration, the first PPDU and the second PPDU may respectively include a first padding field and a second padding field that are of a specific length through post-FEC padding. For example, the first PPDU to be generated by the station device 220 includes at least first padding bits and the target PE field, and the second PPDU to be generated by the station device 230 includes at least first padding bits and the target PE field. The first padding bits and the target PE field correspond to duration that is not less than the first PE duration. This can ensure that the generated first PPDU can provide sufficient additional processing duration for the receiving device.

In some example embodiments, the first padding bits are determined based on a first pre-FEC padding factor, and the second padding bits are determined based on a second pre-FEC padding factor. The first pre-FEC padding factor indicates a proportion of at least a part of the first padding bits in the first symbol of the data field of the first PPDU, and the second pre-FEC padding factor indicates a proportion of the second padding bits in the second symbol of the data field of the second PPDU. It should be understood that, depending on specific configurations of the target PE field, the first pre-FEC padding factor, and the second pre-FEC padding factor, at least one of a quantity of bits in the first padding bits and a quantity of bits in the second padding bits may be zero.

In some example embodiments, the first symbol may be the last symbol in the data field of the first PPDU, and the second symbol may be the last symbol in the data field of the second PPDU.

In some other example embodiments, the first symbol may be a symbol before the last symbol in the data field of the first PPDU, and the second symbol may be the last symbol in the data field of the second PPDU. In such an embodiment, the first padding bits include a first part located in the first symbol and a second part from a symbol following the first symbol to the last symbol. In other words, all bits from a symbol following the first symbol to the last symbol are occupied by the second part of the first padding bits.

In an embodiment of TB PPDU solicited by TRS, the first pre-FEC padding factor and the second pre-FEC padding factor may be a default value or a predefined value. In an embodiment of TB PPDU solicited by a trigger frame, the first device 710 may further determine, in 704, the first pre-FEC padding factor and the second pre-FEC padding factor based on the first PE duration and the second PE duration.

In 706, the first device 710 generates indication information for indicating the third packet extension duration. Further, in the embodiment of TB PPDU solicited by the trigger frame, the indication information may be carried in the trigger frame, and the trigger frame may further indicate the first pre-FEC padding factor and the second pre-FEC padding factor. In addition, the trigger frame may further indicate a location of the first padding bits in the data field of the first PPDU, for example, whether all the first padding bits are located in the last symbol, or the first padding bits are located in all symbols from one specific symbol before the last symbol to the last symbol. In the embodiment of TB PPDU solicited by TRS, the indication information is an EHT operation parameter of the first PPDU. For example, the third PE duration may be indicated by a PE value subfield in the EHT operation parameter field.

In the embodiment of TB PPDU solicited by the trigger frame, when the first symbol is the last symbol in the data field of the first PPDU, the first device 710 may determine the third PE duration and the first pre-FEC padding factor as one of the following configurations:

- the third PE duration is 16 μs, and a value of the first pre-FEC padding factor is one of 1, 2, and 3;
- the third PE duration is 12 μs, and a value of the first pre-FEC padding factor is one of 1 and 2; or
- the third PE duration is 8 μs, and a value of the first pre-FEC padding factor is 1.

In the foregoing embodiment, the first device 710 may determine a value of the second pre-FEC padding factor as one of 1, 2, 3, and 4.

In the embodiment of TB PPDU solicited by the trigger frame, when the first symbol the last symbol in the data field of the first PPDU, the first device 710 may alternatively determine the third PE duration, the first pre-FEC padding factor, and the first pre-FEC padding factor as the following configuration:

- the third PE duration is 16 μs, a value of the first pre-FEC padding factor is 3, and a value of the second pre-FEC padding factor is 4;
- the third PE duration is 12 μs, a value of the first pre-FEC padding factor is 2, and a value of the second pre-FEC padding factor is 3; or
- the third PE duration is 8 μs, a value of the first pre-FEC padding factor is 1, and a value of the second pre-FEC padding factor is 2 or 4.

In the foregoing configuration, target PE duration $T_{PE}$ is equal to predefined PE duration $T_{PE}$ for HE and EHT.

In the embodiment of TB PPDU solicited by the trigger frame, when the first symbol the last symbol in the data field of the first PPDU, the first device 710 may alternatively determine the third PE duration, the first pre-FEC padding factor, and the second pre-FEC padding factor as the following configuration:

- the third PE duration is 16 μs, the value of the first pre-FEC padding factor is one of 1, 2, and 3, and the value of the second pre-FEC padding factor is 4;
- the third PE duration is 12 μs, the value of the first pre-FEC padding factor is one of 1 and 2, and the value of the second pre-FEC padding factor is 3; or
- the third PE duration is 8 μs, a value of the first pre-FEC padding factor is 1, and a value of the second pre-FEC padding factor is 2 or 4.

In the foregoing configuration, target PE duration for HE is equal to predefined PE duration for HE.

It should be noted that, correspondingly, the second device may send the TB PPDU by using the configuration mentioned in the foregoing embodiment.

In an embodiment in which the first symbol is the last symbol in the data field of the first PPDU and the A-PPDU includes a TB PPDU solicited by TRS, the value of the first pre-FEC padding factor may be predefined as one of 1, 2, and 3.

In an embodiment in which the A-PPDU includes a TB PPDU solicited by trigger response scheduling TRS, because the first pre-FEC padding factor may act on the last symbol in the data field of the first PPDU, or may act on a symbol before the last symbol, the indication information may further include a second indicator for indicating the first pre-FEC padding factor. For example, a first value of the second indicator may indicate that all first padding bits are located in the last symbol in the data field of the first PPDU and that the value of the first pre-forward error correction padding factor is 4, and a second value of the second indicator may indicate that the value of the first pre-forward error correction padding factor is a predefined value. For example, when the first pre-FEC padding factor may act on the last symbol of the data field of the first PPDU, the predefined value may be one of 1, 2, or 3. When the first pre-FEC padding factor acts on a symbol before the last symbol, the predefined value may be one of 1, 2, 3, or 4.

In this manner, the access device may indicate appropriate PE duration to the EHT device and the HE device by using the indication information, so that the PE fields in the triggered A-PPDU not only can provide sufficient additional processing duration, but also can keep end alignment of the PE fields.

It should be understood that although the operations in process 700 are depicted in a particular order, this should not be understood as requiring such operations to be completed in the particular order shown or in a successive order, or performing all the described operations to obtain the desired result. Sometimes, multitasking or parallel processing can be beneficial. Similarly, while the discussion above includes specific implementation details, this should not be construed as limiting the scope of any invention or claim, but rather as description of specific example embodiments that may be specific to a particular invention. Specific features described in this specification in the context of separate example embodiments may also be integrated into a single example embodiment. On the other hand, various features that are described in the context of a single example embodiment may also be implemented separately in a plurality of example embodiments or in any suitable sub-combination.

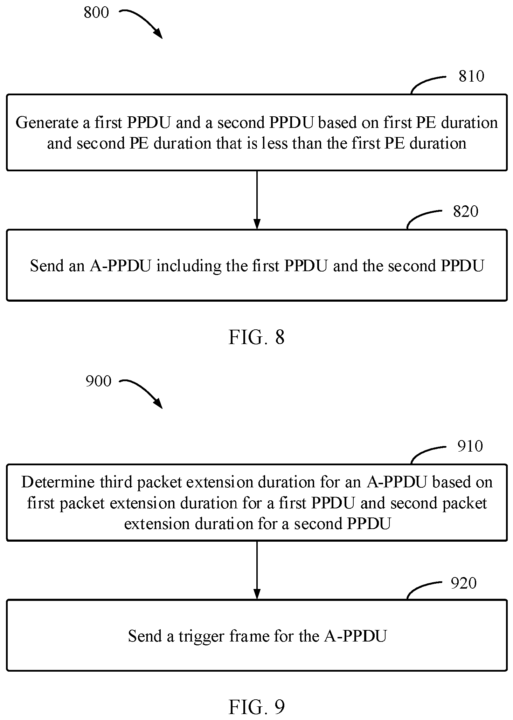

FIG. 8 is a flowchart of a communication method 800 according to an example embodiment of this application. The method 800 may be implemented by the access device 210 shown in FIG. 2, and for ease of discussion, the method 800 will be described below with reference to FIG. 2. It should be understood that the method 800 is also applicable to another communication scenario and device.

In the method 800, the access device 210 transmits an A-PPDU to the station devices 220 and 230, where the A-PPDU includes a first PPDU for EHT and a second PPDU for HE, and the first PPDU may be an MU PPDU, and the second PPDU may be an SU PPDU or an MU PPDU. In 810, the access device 210 generates the first PPDU and the second PPDU based on first PE duration and second PE duration that is less than the first PE duration. The first PE duration may indicate duration of a predefined PE field required for the first PPDU, and the second PE duration indicates PE duration supported by the second PPDU. The first PPDU includes first padding bits and a target PE field, and the second PPDU includes second padding bits and the target PE field. The target PE field corresponds to third PE duration that does not exceed the second PE duration. and the first padding bits and the target PE field correspond to duration that is not less than the first PE duration.

It should be understood that the third PE duration is target PE duration, that is, PE duration actually used when the first PPDU and the second PPDU are sent.

In some example embodiments, the first padding bits are determined based on a first pre-FEC padding factor, and the second padding bits are determined based on a second pre-FEC padding factor. The first pre-FEC padding factor may indicate a proportion of at least a part of the first padding bits in a first symbol in a data field of the first PPDU, and the second pre-FEC padding factor may indicate a proportion of the second padding bits in a second symbol in a data field of the second PPDU. It should be understood that, depending on specific configurations of the target PE field, the first pre-FEC padding factor, and the second pre-FEC padding factor, at least one of a quantity of bits in the first padding bits and a quantity of bits in the second padding bits may be zero.

In some example embodiments, the first symbol may be the last symbol in the data field of the first PPDU, and the second symbol may be the last symbol in the data field of the second PPDU. In this case, the access device 210 may determine the third PE duration and the first pre-FEC padding factor as one of the following configurations:

- the third PE duration is 16 $\mu$s, and a value of the first pre-FEC padding factor is one of 1, 2, and 3;
- the third PE duration is 12 $\mu$s, and a value of the first pre-FEC padding factor is one of 1 and 2; or
- the third PE duration is 8 $\mu$s, and a value of the first pre-FEC padding factor is 1.

In the foregoing embodiment, a value of the second pre-FEC padding factor may be one of 1, 2, 3, and 4.

As an alternative configuration of the foregoing configuration, in another example embodiment, the access device 210 may determine the third PE duration, the first pre-FEC padding factor, and the second pre-FEC padding factor as one of the following configurations:

- the third PE duration is 16 $\mu$s, a value of the first pre-FEC padding factor is 3, and a value of the second pre-FEC padding factor is 4;
- the third PE duration is 12 $\mu$s, a value of the first pre-FEC padding factor is 2, and a value of the second pre-FEC padding factor is 3; or
- the third PE duration is 8 $\mu$s, a value of the first pre-FEC padding factor is 1, and a value of the second pre-FEC padding factor is 2 or 4.

In the foregoing configuration, target PE duration $T_{PE}$ is equal to predefined PE duration $T_{PE}$ for HE and EHT.

As another alternative configuration of the foregoing configuration, in still some example embodiments, the access device 210 may also determine the third PE duration, the first pre-FEC padding factor, and the second pre-FEC padding factor as the following configuration:

- the third PE duration is 16 $\mu$s, the value of the first pre-FEC padding factor is one of 1, 2, and 3, and the value of the second pre-FEC padding factor is 4;
- the third PE duration is 12 $\mu$s, the value of the first pre-FEC padding factor is one of 1 and 2, and the value of the second pre-FEC padding factor is 3; or
- the third PE duration is 8 $\mu$s, a value of the first pre-FEC padding factor is 1, and a value of the second pre-FEC padding factor is 2 or 4.

In the foregoing configuration, target PE duration for HE is equal to predefined PE duration for HE.

In some example embodiments, the first symbol may be a symbol before the last symbol in the data field of the first PPDU, the second symbol may be the last symbol in the data field of the second PPDU, and the first padding bits include a first part in the first symbol and a second part from a symbol following the first symbol to the last symbol.

In some example embodiments, the first PPDU may include a first indicator for indicating that a sent PPDU is an A-PPDU. For example, for an A-PPDU, a configuration that the first padding bits include the first part in the first symbol and the second part starting from the symbol following the first symbol to the last symbol may be determined in advance. In this way, based on the first indicator included in the first PPDU, the station devices 220 and 230 may determine a specific configuration for the first padding bit.

In some example embodiments, the third PE duration may be one of 16 μs, 12 μs, 8 μs, 4 μs, and 0 μs, and each of a value of the first pre-FEC padding factor and a value of the second pre-FEC padding factor is one of 1, 2, 3, and 4.

In 820, the access device 210 sends the A-PPDU including the first PPDU and the second PPDU. For example, the access device 210 may aggregate the first PPDU and the second PPDU into an A-PPDU in an orthogonal manner in frequency domain for transmission. In this manner, PE fields in the A-PPDU can provide sufficient additional processing duration for a receiving device while alignment of ends of the PE fields is maintained.

The station device 220 may then receive the A-PPDU from the access device 210 and decode the first PPDU on a frequency band for an EHT device.

FIG. 9 is a flowchart of a communication method 900 according to an example embodiment of this application. The method 900 may be implemented by the access device 210 shown in FIG. 2, and for ease of discussion, the method 900 will be described below with reference to FIG. 2. It should be understood that the method 1100 is also applicable to another communication scenario and device.

In the method 900, the access device 210 may send indication information indicating target PE duration for an A-PPDU to the station devices 220 and 230. Subsequently, the access device 210 may send, to the station devices 220 and 230, a PPDU that carries TRS and that is used to trigger an A-PPDU. In response to triggering an A-PPDU, the station devices 220 and 230 respectively send, in an orthogonal manner in frequency domain, the first PPDU and the second PPDU that include the target PE duration. In this example, the first PPDU and the second PPDU form the A-PPDU.

It should be understood that in the method 900, the A-PPDU may be solicited through hybrid transmission of a trigger frame and TRS. When the A-PPDU is solicited through hybrid transmission, configuration of the trigger frame should be consistent with configuration of the TRS and comply with configuration parameters of the TRS.

In 910, the access device 210 determines, based on first PE duration for the first PPDU and second PE duration for the second PPDU, third PE duration for the to-be-triggered A-PPDU. The A-PPDU may include the first PPDU and the second PPDU that are orthogonal in frequency.

The first PE duration may indicate duration of a predefined PE field required for the first PPDU, and the second PE duration may indicate PE duration supported by the second PPDU. In this example, the second PE duration is less than the first PE duration. To align PE fields in the A-PPDU, the access device 210 may set PE duration that does not exceed the second PE duration for the first PPDU and the second PPDU, and set first padding bits and second padding bits through post-FEC padding, to provide additional processing time.

The third PE duration determined in 910 corresponds to a target PE field and does not exceed the second PE duration. The first PPDU includes first padding bits and a target PE field, the second PPDU includes second padding bits and the target PE field, and the first padding bits and the target PE field correspond to duration that is not less than the first PE duration.

In 920, the access device 210 sends indication information for indicating the third PE duration. The station devices 220 and 230 may separately generate the first PPDU and the second PPDU based on the third PE duration, and then send the first PPDU and the second PPDU as the A-PPDU in an orthogonal manner in frequency.

In some example embodiments, the first padding bits are determined based on a first pre-FEC padding factor, and the second padding bits are determined based on a second pre-FEC padding factor. The first pre-FEC padding factor may indicate a proportion of at least a part of the first padding bits in a first symbol in a data field of the first PPDU, and the second pre-FEC padding factor may indicate a proportion of the second padding bits in a second symbol in a data field of the second PPDU.

In an embodiment of an A-PPDU including a TB PPDU solicited by a trigger frame, the indication information is carried in the trigger frame, and the trigger frame further indicates the first pre-FEC padding factor and the second pre-FEC padding factor. In an embodiment of an A-PPDU including a TB PPDU solicited by trigger response scheduling, the indication information includes an EHT operation parameter about the first PPDU. For example, the third PE duration may be indicated by a PE duration subfield in an EHT operation parameter field, and values of the first pre-FEC padding factor and the second pre-FEC padding factor may be default values or predefined values.

In some example embodiments, the first symbol may be the last symbol in the data field of the first PPDU, and the second symbol may be the last symbol in the data field of the second PPDU. In another example embodiment, the first symbol may be a symbol before the last symbol in the data field of the first PPDU, the second symbol is the last symbol in the data field of the second PPDU, and the first padding bits include a first part in the first symbol and a second part from a symbol following the first symbol to the last symbol.

In an embodiment in which the A-PPDU includes the TB PPDU solicited by the trigger frame and a first symbol is the last symbol in the data field of the first PPDU, the first device 210 may determine the third PE duration and the first pre-FEC padding factor as one of the following configurations:

- the third PE duration is 16 μs, and a value of the first pre-FEC padding factor is one of 1, 2, and 3;

- the third PE duration is 12 $\mu$s, and a value of the first pre-FEC padding factor is one of 1 and 2; or
- the third PE duration is 8 $\mu$s, and a value of the first pre-FEC padding factor is 1.

In the foregoing example embodiment, the first device 210 may determine a value of the second pre-FEC padding factor as one of 1, 2, 3, and 4.

As an alternative configuration of the foregoing configuration, the first device 210 may determine the third PE duration, the first pre-FEC padding factor, and the second pre-FEC padding factor as one of the following configurations:

- the third PE duration is 16 $\mu$s, a value of the first pre-FEC padding factor is 3, and a value of the second pre-FEC padding factor is 4;
- the third PE duration is 12 $\mu$s, a value of the first pre-FEC padding factor is 2, and a value of the second pre-FEC padding factor is 3; or
- the third PE duration is 8 $\mu$s, a value of the first pre-FEC padding factor is 1, and a value of the second pre-FEC padding factor is 2 or 4.

Because the first pre-FEC padding factor may be applied to the last symbol, or may be applied to a symbol before the last symbol, all the first padding bits may be located in the last symbol, or a part of the first padding bits may be located in the last symbol, and symbols from a symbol after the first symbol to the last symbol are padded with the other part of the first padding bits. In some example embodiments, the trigger frame may further indicate a location of the first padding bits in the data field of the first PPDU.

In an embodiment in which the A-PPDU includes the TB PPDU solicited by TRS and a first symbol is the last symbol in the data field of the first PPDU, a value of the first pre-forward error correction padding factor is a predefined value, and the predefined value is one of 1, 2. and 3.

In an embodiment in which the A-PPDU includes the TB PPDU solicited by TRS and a first symbol is a symbol before the last symbol, a value of the first pre-forward error correction padding factor is a predefined value, and the predefined value is one of 1, 2, 3, and 4. In this embodiment, the indication information further includes a second indicator for indicating the first pre-forward error correction padding factor. Specifically: A first value of the second indicator may indicate that all the first padding bits are located in the last symbol in the data field of the first PPDU and that the value of the first pre-forward error correction padding factor is 4; and a second value of the second indicator may indicate that the value of the first pre-forward error correction padding factor is a predefined value.

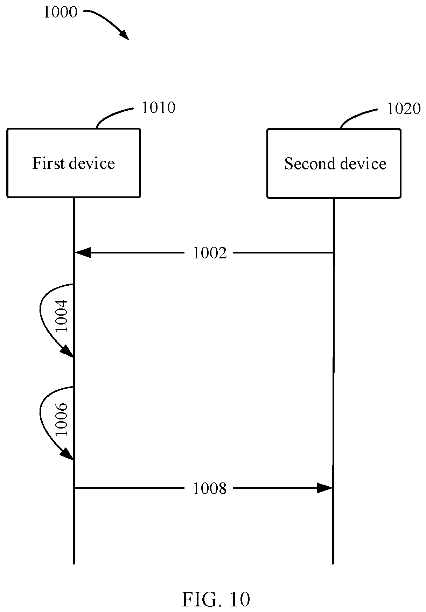

FIG. 10 is a diagram of signaling interaction of a communication mechanism according to an example embodiment of this application. An example interaction process 1000 may include the access device 210 and the station device 220 as shown in FIG. 2. For example, the station device 220 acts as a first device 1010 and the access device 210 acts as a second device 1020. It should be understood that this process is also applicable to another communication scenario and device.

In the process 1000, a TB PPDU solicited by TRS is transmitted between the first device 1010 and the second device 1020. In 1002, the first device 1010 receives a third PPDU that carries an EHT operation parameter, where the EHT operation parameter includes a third indicator for indicating packet extension duration.

In 1004, the first device 1010 determines the PE duration based on the EHT operation parameter. The third indicator that is included in the EHT operation parameter and that is used to indicate the PE duration may have a plurality of forms. As an example, the third indicator may be an indicator with a length of 1 bit. In some example embodiments, a first value (e.g., 0) of the third indicator may indicate that the PE duration is 20 $\mu$s, and a second value (e.g., 1) of the third indicator may indicate that the PE duration is duration specified by an HE operation parameter, that is, the PE duration for EHT is set by reading a default PE value subfield in the HE operation parameter.

In some other example embodiments, a first value of the third indicator may indicate that the PE duration is one of 16 $\mu$s and 20 $\mu$s. In such an embodiment, the PE duration for EHT may also be determined based on a fourth PPDU that carries TRS. For example, the fourth PPDU may indicate a bandwidth for the fourth PPDU, where the fourth PPDU may be a DL EHT PPDU. When the fourth PPDU is transmitted in a form of an A-PPDU, the fourth PPDU may also indicate a bandwidth for the A-PPDU including the fourth PPDU. If the bandwidth is greater than a first threshold (for example, 160 MHz), the first device 1010 may determine that the PE duration is 20 $\mu$s. Otherwise, if the bandwidth is less than or equal to a first threshold, the first device 1010 may determine that the PE duration is 16 $\mu$s.

In another example, the PE duration may be further determined based on a resource unit RU size that is indicated by the fourth PPDU and that is for the fourth PPDU. If the RU size for the fourth PPDU is greater than a second threshold size (for example, 2*996-tone RU), the first device 1010 may determine that the PE duration is 20 $\mu$s. Otherwise, if the RU size for the fourth PPDU is less than or equal to a second threshold size, the first device 1010 may determine that the PE duration is 16 $\mu$s.

In still other example embodiments, the third indicator may be an indicator longer than 1 bit. For example, the third indicator may be a default PE duration subfield in an EHT operation parameter field, and includes 3 bits. When a value of the default PE duration subfield is 0 to 5, the default PE duration subfield corresponds to 0 μs, 4 μs, 8 μs, 12 μs, 16 μs and 20 μs respectively.

In 1006, the first device 1010 generates a first PPDU based on the PE duration. In step 1008, the first device 1020 sends the first PPDU.

According to the method provided in this embodiment of this application, in the trigger-based (triggering-based, TB) PPDU solicited by TRS, processing duration provided by the PE field may be flexibly set to 0 μs, 4 μs, 8 μs, 12 μs, 16 μs or 20 μs based on a requirement, to meet different requirements of different devices for additional processing duration. In addition, in the method, a processing time of 16 μs or 20 μs may be further dynamically selected based on a network bandwidth or a resource unit size, thereby improving a conventional packet extension mechanism and improving performance of a WLAN system.

It should be understood that, in the foregoing process 1000, the third PPDU and the fourth PPDU may be a same PPDU or may be different PPDUs. In addition, specific settings of the first value and the second value of the third indicator in the foregoing embodiments are merely for description. In other embodiments, the first value of the third indicator may be 0, and the second value may be 1. In addition, indication information of the PE duration for the EHT may be carried in another field or subfield, for example, B18 to B23 of the HE operation parameter field.

Although the operations in the process 1000 are depicted in a particular order, this should not be understood as requiring such operations to be completed in the particular order shown or in a successive order, or performing all the described operations to obtain the desired result. Sometimes, multitasking or parallel processing can be beneficial. Similarly, while the discussion above includes specific implementation details, this should not be construed as limiting the scope of any invention or claim, but rather as description of specific example embodiments that may be specific to a particular invention. Specific features described in this specification in the context of separate example embodiments may also be integrated into a single example embodiment. On the other hand, various features that are described in the context of a single example embodiment may also be implemented separately in a plurality of example embodiments or in any suitable sub-combination.

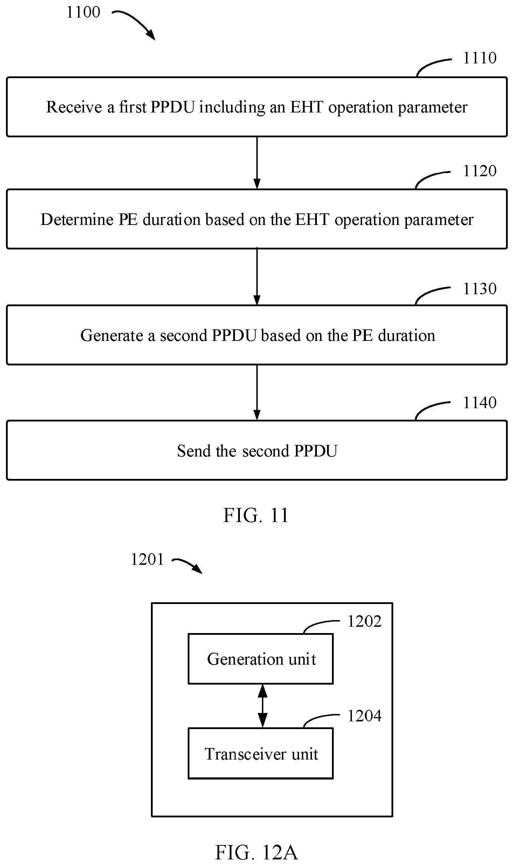

FIG. 11 is a flowchart of a communication method 1100 according to an example embodiment of this application. The method 1100 may be implemented by the station device 220 shown in FIG. 2, and for ease of discussion, the method 1100 will be described below with reference to FIG. 2. It should be understood that the method 1100 is also applicable to another communication scenario and device.

In the method 1100, the station device 220 transmits a second PPDU for EHT based on TRS. In 1110, the station device 220 receives a first PPDU. The first PPDU may include an EHT operation parameter, and the EHT operation parameter includes a third indicator for indicating predefined PE duration. In some examples, the first PPDU may be a PPDU that carries TRS and that is sent by the access device 210.

In 1120, the station device 220 determines PE duration based on the EHT operation parameter. In some example embodiments, the third indicator may be included in an EHT operation parameter field. The third indicator may be an indicator with a length of 1 bit, for example, a first value (for example, 1) of the third indicator indicates that the PE duration is 20 μs, and a second value (for example, 0) of the third indicator indicates that the PE duration for EHT is duration specified by an HE operation parameter, that is, the PE duration complies with a configuration in a default PE duration subfield in an HE operation parameter field.

In some other example embodiments, a first value of the third indicator may indicate either of 16 μs and 20 μs, and a second value of the third indicator may indicate that the PE duration for the EHT complies with a configuration in a default PE duration subfield in an HE operation parameter field. In this embodiment, the first PPDU is a PPDU of trigger response scheduling TRS, and the PE duration may also be determined based on a third PPDU that carries a trigger frame. For example, the third PPDU indicates a bandwidth for the third PPDU. If the third PPDU indicates that the bandwidth for the third PPDU is greater than a first threshold (for example, 160 MHz), the station device 220 determines that the PE duration is 20 μs. Otherwise, if the third PPDU indicates that the bandwidth for the third PPDU is less than or equal to a first threshold, the station device 220 determines that the PE duration is 16 μs.

In addition or alternatively, the PE duration may be further determined based on a fourth PPDU that carries a trigger frame. For example, the fourth PPDU may indicate a resource unit RU size for the second PPDU. If the fourth PPDU indicates that the RU size is greater than a second threshold size (for example, 2*996-tone RU), the station device 220 determines that the PE duration is 20 μs. Alternatively, if the fourth PPDU indicates that the quantity of RUs is less than or equal to a second threshold size, the station device 220 determines that the PE duration is 16 μs.

In some other embodiments, the third indicator may be an indicator with a length greater than 1 bit, and the third indicator indicates that the PE duration is one of 0 μs, 4 μs, 8 μs, 12 μs, 16 μs and 20 μs. For example, the default PE duration subfield in the EHT operation parameter field includes 3 bits. When a value of the default PE duration subfield is 0 to 5, the default PE duration subfield corresponds to 0 μs, 4 μs, 8 μs, 12 μs, 16 μs and 20 μs respectively.

In 1130, the station device 220 generates the second PPDU based on the PE duration. In 1140, the station device 220 sends the second PPDU.

It should be understood that specific settings of the first value and the second value of the third indicator in the foregoing embodiments are merely for description. In other embodiments, the first value of the third indicator may be 0, and the second value may be 1. In addition, indication information of the PE duration for the EHT may be carried in another field or subfield, for example, B18 to B23 of the HE operation parameter field.

According to the method provided in this embodiment of this application, processing duration provided by the PE field may be flexibly set to 0 $\mu$s, 4 $\mu$s, 8 $\mu$s, 12 $\mu$s, 16 $\mu$s or 20 $\mu$s based on a requirement for the TB PPDU solicited by TRS, to meet different requirements of different devices for additional processing duration. In addition, in the method, a processing time of 16 $\mu$s or 20 $\mu$s may be further dynamically selected based on a network bandwidth or a resource unit size, thereby improving a conventional packet extension mechanism and improving performance of a WLAN system.

FIG. 12A to FIG. 12C are schematic diagrams of communication apparatuses according to an example embodiment of this application. A communication apparatus 1201 shown in FIG. 12A may be implemented by using the access device 210 shown in FIG. 2, or may be implemented by using another appropriate device. It should be understood that the communication apparatus 1201 is merely an example and does not imply any limitation on the scope of the present disclosure. Embodiments of the present disclosure may be further embodied in different communication apparatuses. It should be further understood that the communication apparatus 1201 may further include other elements or entities. For ease of description, the other elements or entities are not shown, but this does not mean that embodiments of the present disclosure do not have these elements or entities.

As shown in FIG. 12A, the communication apparatus 1201 includes a generation unit 1202 and a transceiver unit 1204. The generation unit 1202 is configured to generate a first PPDU and a second PPDU based on first PE duration and second PE duration that is less than the first PE duration. The first PE duration indicates duration of a predefined packet extension field required for the first PPDU, and the second PE duration indicates packet extension duration supported by the second PPDU. The generated first PPDU includes first padding bits and a target PE field, the generated second PPDU includes second padding bits and the target PE field, and the target PE field corresponds to third PE duration that does not exceed second PE duration. The first padding bits and the target PE field correspond to duration that is not less than the first PE duration.

The transceiver unit 1204 is configured to send an A-PPDU including the first PPDU and the second PPDU. For example, the transceiver unit 1204 may send the first PPDU and the second PPDU on different frequency domain resources, and the first PPDU may be an MU PPDU. It should be understood that the first PPDU and the second PPDU may both be EHT PPDUs, or may both be HE PPDUs, or may be a combination of an EHT PPDU and an HE PPDU. In addition, the A-PPDU may further include another PPDU other than the first PPDU and the second PPDU. This is not limited in this application.

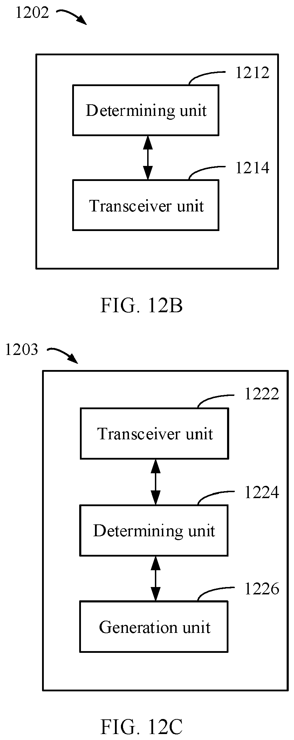

A communication apparatus 1210 shown in FIG. 12B may be implemented by using the access device 210 shown in FIG. 2, or may be implemented by using another appropriate device. It should be understood that the communication apparatus 1210 is merely an example and does not imply any limitation on the scope of the present disclosure. Embodiments of the present disclosure may be further embodied in different communication apparatuses. It should be further understood that the communication apparatus 1210 may further include other elements or entities. For ease of description, the other elements or entities are not shown, but this does not mean that embodiments of the present disclosure do not have these elements or entities.

As shown in FIG. 12B, the communication apparatus 1210 includes a determining unit 1212 and a transceiver unit 1214. The determining unit 1212 is configured to determine, based on first packet extension duration for a first physical layer protocol data unit PPDU and second packet extension duration for a second PPDU, third packet extension duration for a to-be-triggered aggregate physical layer protocol data unit A-PPDU. The A-PPDU includes the first PPDU and the second PPDU, and the third packet extension duration does not exceed the second packet extension duration and corresponds to a target packet extension field. The first packet extension duration indicates duration of a predefined packet extension field required for the first PPDU, and the second packet extension duration is less than the first packet extension duration and indicates packet extension duration supported by the second PPDU. The first PPDU includes first padding bits and a target packet extension field, and the second PPDU includes second padding bits and the target packet extension field. The first padding bits and the target packet extension field correspond to duration that is not less than the first packet extension duration.

The transceiver unit 1214 is configured to send indication information for indicating the third packet extension duration. For example, the indication information may be a third PPDU that carries an EHT operation parameter.

A communication apparatus 1220 shown in FIG. 12C may be implemented by using the station device 220 shown in FIG. 2, or may be implemented by using another appropriate device. It should be understood that the communication apparatus 1220 is merely an example and does not imply any limitation on the scope of the present disclosure. Embodiments of the present disclosure may be further embodied in different communication apparatuses. It should be further understood that the communication apparatus 1220 may further include other elements or entities. For ease of description, the other elements or entities are not shown, but this does not mean that embodiments of the present disclosure do not have these elements or entities.

As shown in FIG. 12B, the communication apparatus 1220 includes a transceiver unit 1222, a determining unit 1224, and a generation unit 1226. The transceiver unit 1222 is configured to receive a third physical layer protocol data unit PPDU that carries an extremely high throughput EHT operation parameter. The EHT operation parameter includes a third indicator, and the third indicator indicates packet extension duration. The transceiver unit 1222 is further configured to send a first PPDU.

The determining unit 1224 is configured to determine the PE duration based on the EHT operation parameter. In some example embodiments, the determining unit 1224 further determines the PE duration based on a fourth PPDU that carries TRS. For example, the fourth PPDU may indicate a bandwidth for the fourth PPDU or an aggregate physical layer protocol data unit A-PPDU including the fourth PPDU, and the determining unit 1224 is further configured to: if the bandwidth is greater than a first threshold, determine that the packet extension duration is 20 $\mu$s; or if the bandwidth is less than or equal to the first threshold, determine that the packet extension duration is 16 $\mu$s. In another example, the fourth PPDU may indicate a resource unit RU size for the fourth PPDU, and the determining unit 1224 is further configured to: if the RU size is greater than a second threshold size, determine that the packet extension duration is 20 $\mu$s; or if the RU size is less than or equal to a second threshold size, determine that the packet extension duration is 16 $\mu$s.

The generation unit 1226 is configured to generate the first PPDU based on the PE duration.

It should be further understood that, the operations and features described above with reference to FIG. 4 to FIG. 11 are also applicable to the communication apparatuses 1201 to 1203 and have the same effect. Details are not described again. Units or modules included in the communication apparatuses 1201 to 1203 may be implemented in various manners, including software, hardware, firmware, or any combination thereof. In some embodiments, one or more units may be implemented by using software and/or firmware, for example, machine-executable instructions stored in a storage medium. In addition to or as an alternative to the machine-executable instructions, some or all of the units in the communication apparatus 1201 may be implemented at least partially by using one or more hardware logical components. By way of example and not limitation, the available example hardware logic components include a field programmable gate array (FPGA), an application-specific integrated circuit (ASIC), an application-specific standard product (ASSP), a system on chip (SOC), and a complex programmable logic device (CPLD).

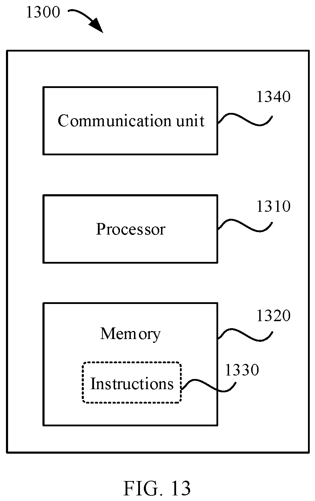

FIG. 13 is a block diagram of a device 1300 for implementing some embodiments of this application. The device 1300 can be configured to implement the access device 210 and the station devices 220 and 230 shown in FIG. 2. It should be understood that the device 1300 is merely used for exemplary purposes, and does not imply any limitation on the scope of this application. Embodiments of this application may be further embodied in different devices. It should be further understood that the device 1300 may further include other elements or entities. For ease of description, the other elements or entities are not shown, but this does not mean that embodiments of this application do not have these elements or entities.

As shown in FIG. 13, the device 1300 includes a processor 1310. The processor 1310 controls an operation and a function of the device 1300. For example, in some example embodiments, the processor 1210 may perform various operations by using instructions 1330 stored in a memory 1320 coupled to the processor 1310. The memory 1320 may be of any proper type applicable to a local technical environment, and may be implemented by using any suitable data storage technology, including but not limited to a semiconductor-based storage device, a magnetic storage device and system, and an optical storage device and system. Although only one memory unit is shown in FIG. 13, there may be a plurality of physically different memory units in the device 1300.

The processor 1310 may be of any proper type suitable for a local technical environment, and may include but is not limited to one or more of a general-purpose computer, a dedicated computer, a microcontroller, a digital signal processor (DSP), and a controller-based multi-core controller architecture. The device 1300 may also include a plurality of processors 1310. The processor 1310 is coupled to a communication unit 1340. The communication unit 1340 may receive and send information by using a radio signal or through an optical fiber, a cable, and/or another component.

When the device 1300 acts as the access device 210 or the station device 220, the processor 1310 may implement the operations and actions described above with reference to FIG. 7 to FIG. 11 by executing instructions. All features described above with reference to FIG. 7 to FIG. 11 are applicable to the device 1300. Details are not described herein again.

These modules and models may be stored in the memory 1320 in a manner of computer program code or instructions 1330. The processor executes the program code or the instructions in the memory 1320, so that the device 1300 performs the processing processes implemented by the access device 210 or the station device 220 in FIG. 8, FIG. 9, and FIG. 11.

In general, the various example embodiments of this application may be implemented in hardware or dedicated circuitry, software, logic, or any combination thereof. Some aspects may be implemented in hardware, while other aspects may be implemented in firmware or software that may be executed by a controller, a microprocessor, or another computing device. When aspects of the example embodiments of this application are illustrated or described as block diagrams, flowcharts, or represented using some other figures, it will be understood that the blocks, apparatuses, systems, techniques, or methods described herein may be implemented as non-limiting examples in hardware, software, firmware, dedicated circuitry or logic, general-purpose hardware or controllers, or other computing devices, or some combinations thereof.

For example, the example embodiments of this application may be described in a context of machine-executable or computer-executable instructions. The machine-executable instructions are, for example, a program module executed in a device included in a real or virtual processor of a target. Usually, the program module includes a routine, a program, a library, an object, a class, a component, a data structure, and the like, and executes a specific task or implements a specific abstract data structure. In various example embodiments, functions of program modules may be combined or split between the described program modules. The machine-executable instruction for the program module may be executed locally or within a distributed device. In the distributed device, the program modules may be located both locally and in a remote storage medium.

Computer program code used to implement the methods disclosed in this application may be written in one or more programming languages. The computer program code may be provided for a processor of a general-purpose computer, a dedicated computer, or another programmable data processing apparatus, so that when the program code is executed by the computer or the another programmable data processing apparatus, functions/operations specified in the flowcharts and/or block diagrams are implemented. The program code may be executed completely on a computer, partially on a computer, as an independent software package, partially on a computer and partially on a remote computer, or completely on a remote computer or server.

In the context of this application, a machine-readable medium or a computer-readable medium may be any tangible medium that includes or stores a program for or has a program related to an instruction execution system, apparatus, or device. The machine-readable medium may be a machine-readable signal medium or a machine-readable storage medium. The machine-readable medium may include but is not limited to an electronic, magnetic, optical, electromagnetic, infrared, or semiconductor system, apparatus, or device, or any suitable combination thereof. More detailed examples of the machine-readable storage medium include an electrical connection with one or more wires, a portable computer disk, a hard disk, a random access memory (RAM), a read-only memory (ROM), an erasable programmable read-only memory (EPROM or flash memory), an optical storage device, a magnetic storage device, or any suitable combination thereof.

In addition, while operations are depicted in a particular order, this should not be understood as requiring such operations to be completed in the particular order shown or in a successive order, or performing all the described operations to obtain the desired result. In some cases, multitasking or parallel processing can be beneficial. Similarly, while the discussion above includes specific implementation details, this should not be construed as limiting the scope of any invention or claim, but rather as description of specific example embodiments that may be specific to a particular invention. Specific features described in this specification in the context of separate example embodiments may also be integrated into a single example embodiment. On the other hand, various features that are described in the context of a single example embodiment may also be implemented separately in a plurality of example embodiments or in any suitable sub-combination.

Although the subject matter has been described in language specific to structural features and/or methodological acts, it should be understood that the subject matter defined in the appended claims is not limited to the specific features or acts described above. Rather, the specific features and acts described above are disclosed as example forms of implementing the claims.

**Claims**

1. A communication method performed by an access device (210, 1020), the method comprising the steps of: sending a physical layer protocol data unit, PPDU, comprising (1002) an extremely high throughput, EHT, operation parameter to a station device (220, 1010), wherein the EHT operation parameter comprises an indicator for indicating a value of a packet extension, PE, duration, a first value of the indicator indicates that the PE duration is 16 µs or 20 µs, and a second value of the indicator indicates that the PE duration is a duration specified by a high efficiency, HE, operation parameter, wherein the indicator is 1 bit, the first value is 1, and the second value is 0.

2. The method according to claim 1, wherein the PE duration is used for packet extension of a trigger-based physical layer protocol data unit, TB PPDU, triggered by trigger response scheduling, TRS.

3. The method according to any one of claims 1 to 2, wherein a default PE duration, Default PE Duration, subfield of the HE operation parameter comprises three bits; when values of the default PE duration subfield are 0 to 4, the default PE duration subfield respectively corresponds to predefined PE duration 0 µs, 4 µs, 8 µs, 12 µs and 16 µs; and values 5 to 7 of the default PE duration subfield are reserved values.

4. A communication method performed by a station device (220, 1010), the method comprising the steps of:

• receiving (step 1110) a physical layer protocol data unit, PPDU, comprising an extremely high throughput, EHT, operation parameter from an access device (210, 1020), wherein the EHT operation parameter comprises an indicator for indicating a value of a packet extension, PE, duration, a first value of the indicator indicates that the PE duration is 16 $\mu$s or 20 $\mu$s, and a second value of the indicator indicates that the PE duration is a duration specified by a high efficiency, HE, operation parameter, wherein the indicator is 1 bit, the first value is 1, and the second value is 0; and
• determining (step 1120) the PE duration based on the EHT operation parameter.

5. The method according to claim 4, wherein the PE duration is used for packet extension of a trigger-based physical layer protocol data unit, TB PPDU, triggered by trigger response scheduling, TRS.

6. The method according to any one of claims 4 to 5, wherein a default PE duration, Default PE Duration, subfield of the HE operation parameter comprises three bits; when values of the default PE duration subfield are 0 to 4, the default PE duration subfield respectively corresponds to predefined PE duration 0 $\mu$s, 4 $\mu$s, 8 $\mu$s, 12 $\mu$s and 16 $\mu$s; and values 5 to 7 of the default PE duration subfield are reserved values.

7. An access device (210, 1020), configured to perform any of the methods according to claims 1 to 3.

8. A station device (220, 1010), configured to perform any of the methods according to claims 4 to 6.

9. A computer-readable storage medium storing computer-executable instructions, wherein, when the computer-executable instructions are executed by an access device, the access device is caused to perform any of the methods according to claims 1 to 3.

10. A computer-readable storage medium storing computer-executable instructions, wherein, when the computer-executable instructions are executed by a station device, the station device is caused to perform any of the methods according to claims 4 to 6.


**Patentansprüche**

1. Kommunikationsverfahren, das durch eine Zugangsvorrichtung (210, 1020) durchgeführt wird, wobei das Verfahren die folgenden Schritte umfasst:

• Senden einer Protokolldateneinheit der physischen Schicht, PPDU, umfassend (1002) einen Betriebsparameter für extrem hohen Durchsatz, EHT-Betriebsparameter, an eine Stationsvorrichtung (220, 1010),

wobei der EHT-Betriebsparameter einen Indikator zum Angeben eines Werts einer Dauer der Paketverlängerung, PE-Dauer, umfasst, ein erster Wert des Indikators angibt, dass die PE-Dauer 16 $\mu$s oder 20 $\mu$s beträgt, und ein zweiter Wert des Indikators angibt, dass die PE-Dauer eine Dauer ist, die durch einen Hocheffizienz-Betriebsparameter, HE-Parameter, festgelegt wird, der Indikator 1 Bit ist, der erste Wert 1 ist und der zweite Wert 0 ist.

2. Verfahren nach Anspruch 1, wobei die PE-Dauer zur Paketverlängerung einer auslöserbasierten Protokolldateneinheit der physischen Schicht, TB PPDU, verwendet wird, die durch eine Auslöser-Antwortplanung, TRS, ausgelöst wird.

3. Verfahren nach einem der Ansprüche 1 bis 2, wobei ein Unterfeld der Standard-PE-Dauer, Standard-PE-Dauer-Unterfeld, des HE-Betriebsparameters drei Bits umfasst; wenn Werte des Standard-PE-Dauer-Unterfelds 0 bis 4 sind, das Standard-PE-Dauer-Unterfeld jeweils einer vordefinierten PE-Dauer von 0 $\mu$s, 4 $\mu$s, 8 $\mu$s, 12 $\mu$s und 16 $\mu$s entspricht; und Werte 5 bis 7 des Standard-PE-Dauer-Unterfelds reservierte Werte sind.

4. Kommunikationsverfahren, das durch eine Stationsvorrichtung (220, 1010) durchgeführt wird, wobei das Verfahren die folgenden Schritte umfasst:

• Empfangen (Schritt 1110) einer Protokolldateneinheit der physischen Schicht, PPDU, umfassend einen Betriebsparameter für extrem hohen Durchsatz, EHT-Betriebsparameter, aus einer Zugriffsvorrichtung (210, 1020),
wobei der EHT-Betriebsparameter einen Indikator zum Angeben eines Werts einer Dauer der Paketverlängerung, PE-Dauer, umfasst, ein erster Wert des Indikators angibt, dass die PE-Dauer 16 $\mu$s oder 20 $\mu$s beträgt, und ein zweiter Wert des Indikators angibt, dass die PE-Dauer eine Dauer ist, die durch einen Hocheffizienz-Betriebsparameter, HE-Parameter, festgelegt wird, der Indikator 1 Bit ist, der erste Wert 1 ist und der zweite Wert 0 ist; und
   • Bestimmen (Schritt 1120) der PE-Dauer basierend auf dem EHT-Betriebsparameter.

5. Verfahren nach Anspruch 4, wobei die PE-Dauer zur Paketverlängerung einer auslöserbasierten Protokolldateneinheit der physischen Schicht, TB PPDU, verwendet wird, die durch eine Auslöser-Antwortplanung, TRS, ausgelöst wird.

6. Verfahren nach einem der Ansprüche 4 bis 5, wobei ein Unterfeld der Standard-PE-Dauer, Standard-PE-Dauer-Unterfeld, des HE-Betriebsparameters drei Bits umfasst; wenn Werte des Standard-PE-Dauer-Unterfelds 0 bis 4 sind, das Standard-PE-Dauer-Unterfeld jeweils einer vordefinierten PE-Dauer von 0 $\mu$s, 4 $\mu$s, 8 $\mu$s, 12 $\mu$s und 16 $\mu$s entspricht; und Werte 5 bis 7 des Standard-PE-Dauer-Unterfelds reservierte Werte sind.

7. Zugangsvorrichtung (210, 1020), die dazu konfiguriert ist, ein beliebiges der Verfahren nach den Ansprüchen 1 bis 3 durchzuführen.

8. Stationsvorrichtung (220, 1010), die dazu konfiguriert ist, ein beliebiges der Verfahren nach den Ansprüchen 4 bis 6 durchzuführen.

9. Computerlesbares Speichermedium, das computerausführbare Anweisungen speichert, wobei bei Ausführung der computerausführbaren Anweisungen durch eine Zugangsvorrichtung bewirkt wird, dass die Zugangsvorrichtung ein beliebiges der Verfahren nach den Ansprüchen 1 bis 3 durchführt.

10. Computerlesbares Speichermedium, das computerausführbare Anweisungen speichert, wobei bei Ausführung der computerausführbaren Anweisungen durch eine Stationsvorrichtung bewirkt wird, dass die Stationsvorrichtung ein beliebiges der Verfahren nach den Ansprüchen 4 bis 6 durchführt.

**Revendications**

1. Procédé de communication réalisé par un dispositif d'accès (210, 1020), le procédé comprenant les étapes suivantes :

   • l'envoi d'une unité de données de protocole de couche physique, PPDU, comprenant (1002) un paramètre d'exploitation à très haut débit, EHT, à un dispositif de station (220, 1010),

dans lequel le paramètre d'exploitation EHT comprend un indicateur destiné à indiquer une valeur d'une durée d'extension de paquet, PE, une première valeur de l'indicateur indique que la durée de PE est de 16 $\mu$s ou 20 $\mu$s, et une seconde valeur de l'indicateur indique que la durée de PE est une durée spécifiée par un paramètre d'exploitation à haute efficacité, HE, dans lequel l'indicateur est de 1 bit, la première valeur est 1 et la seconde valeur est 0.

2. Procédé selon la revendication 1, dans lequel la durée de PE est utilisée pour l'extension de paquet d'une unité de données de protocole de couche physique basée sur un déclenchement, TB PPDU, déclenchée par une planification de réponse de déclencheur, TRS.

3. Procédé selon l'une quelconque des revendications 1 à 2, dans lequel un sous-champ de durée de PE par défaut, Durée de PE par défaut, du paramètre d'exploitation HE comprend trois bits ; lorsque des valeurs du sous-champ de durée de PE par défaut sont de 0 à 4, le sous-champ de durée de PE par défaut correspond respectivement à une durée de PE prédéfinie de 0 $\mu$s, 4 $\mu$s, 8 $\mu$s, 12 $\mu$s et 16 $\mu$s ; et des valeurs 5 à 7 du sous-champ de durée de PE par défaut sont des valeurs réservées.

4. Procédé réalisé par un dispositif de station (220, 1010), le procédé comprenant les étapes suivantes :

   • la réception (étape 1110) d'une unité de données de protocole de couche physique, PPDU, comprenant un paramètre d'exploitation à très haut débit, EHT, provenant d'un dispositif d'accès (210, 1020),
dans lequel le paramètre d'exploitation EHT comprend un indicateur destiné à indiquer une valeur d'une durée d'extension de paquet, PE, une première valeur de l'indicateur indique que la durée de PE est de 16 $\mu$s ou 20 $\mu$s,

et une seconde valeur de l'indicateur indique que la durée de PE est une durée spécifiée par un paramètre d'exploitation à haute efficacité, HE, dans lequel l'indicateur est de 1 bit, la première valeur est 1 et la seconde valeur est 0 ; et

• la détermination (étape 1120) de la durée de PE sur la base du paramètre d'exploitation EHT.

5. Procédé selon la revendication 4, dans lequel la durée de PE est utilisée pour l'extension de paquet d'une unité de données de protocole de couche physique basée sur un déclenchement, TB PPDU, déclenchée par une planification de réponse de déclencheur, TRS.

6. Procédé selon l'une quelconque des revendications 4 à 5, dans lequel un sous-champ de durée de PE par défaut, Durée de PE par défaut, du paramètre d'exploitation HE comprend trois bits ; lorsque des valeurs du sous-champ de durée de PE par défaut sont de 0 à 4, le sous-champ de durée de PE par défaut correspond respectivement à une durée de PE prédéfinie de 0 $\mu$s, 4 $\mu$s, 8 $\mu$s, 12 $\mu$s et 16 $\mu$s ; et des valeurs 5 à 7 du sous-champ de durée de PE par défaut sont des valeurs réservées.

7. Dispositif d'accès (210, 1020), configuré pour réaliser l'un quelconque des procédés selon les revendications 1 à 3.

8. Dispositif de station (220, 1010), configuré pour réaliser l'un quelconque des procédés selon les revendications 4 à 6.

9. Support de stockage lisible par ordinateur stockant des instructions exécutables par ordinateur, dans lequel, lorsque les instructions exécutables par ordinateur sont exécutées par un dispositif d'accès, le dispositif d'accès est amené à réaliser l'un quelconque des procédés selon les revendications 1 à 3.

10. Support de stockage lisible par ordinateur stockant des instructions exécutables par ordinateur, dans lequel, lorsque les instructions exécutables par ordinateur sont exécutées par un dispositif de station, le dispositif de station est amené à réaliser l'un quelconque des procédés selon les revendications 4 à 6.

FIG. 1

FIG. 2

FIG. 3

FIG. 4

FIG. 5

600

601

| Element ID | Length | Element ID expansion | HE operation parameter | BSS color information | Basic HE-MCS and NSS set | VHT operation information | Maximum co-hosted BSSID indicator | 6 GHz operation information |
|---|---|---|---|---|---|---|---|---|

610

| Default PE duration | TWT required | TXOP duration RTS threshold | VHT operation information present | Co-hosted BSS | ER SU disabled | 6 GHz operation information present | Reserved |
|---|---|---|---|---|---|---|---|

FIG. 6

FIG. 7

800

810

Generate a first PPDU and a second PPDU based on first PE duration and second PE duration that is less than the first PE duration

820

Send an A-PPDU including the first PPDU and the second PPDU

FIG. 8

900

910

Determine third packet extension duration for an A-PPDU based on first packet extension duration for a first PPDU and second packet extension duration for a second PPDU

920

Send a trigger frame for the A-PPDU

FIG. 9

FIG. 10

1100

1110

Receive a first PPDU including an EHT operation parameter

1120

Determine PE duration based on the EHT operation parameter

1130

Generate a second PPDU based on the PE duration

1140

Send the second PPDU

FIG. 11

1201

1202

Generation unit

1204

Transceiver unit

FIG. 12A

1202

```
┌─────────────────────────────────┐
│                          ┌──────── 1212
│          ┌──────────────────┐   │
│          │ Determining unit │   │
│          └──────────────────┘   │
│                   ↕             │
│                          ┌──────── 1214
│          ┌──────────────────┐   │
│          │ Transceiver unit │   │
│          └──────────────────┘   │
│                                 │
└─────────────────────────────────┘
```

FIG. 12B

1203

```
┌─────────────────────────────────┐
│                          ┌──────── 1222
│          ┌──────────────────┐   │
│          │ Transceiver unit │   │
│          └──────────────────┘   │
│                   ↕             │
│                          ┌──────── 1224
│          ┌──────────────────┐   │
│          │ Determining unit │   │
│          └──────────────────┘   │
│                   ↕             │
│                          ┌──────── 1226
│          ┌──────────────────┐   │
│          │ Generation unit  │   │
│          └──────────────────┘   │
│                                 │
└─────────────────────────────────┘
```

FIG. 12C

1300

Communication unit    1340

Processor    1310

Memory    1320

Instructions    1330

FIG. 13

**EP 4 199 399 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 4277175 A1